# EUROPEAN PATENT SPECIFICATION

(11) **EP 3 978 742 B1**
(45) Date of publication and mention of the grant of the patent: **01.05.2024**
(21) Application number: 20815664.6
(22) Date of filing: 22.04.2020
(51) Int. Cl.: F02D 29/00, B60W 30/20

(54) **STRADDLED VEHICLE**
GRÄTSCHSITZFAHRZEUG
VÉHICULE À SELLE

(30) Priority: 24.05.2019 JP 2019097416
(43) Date of publication of application: 06.04.2022
(73) Proprietor: Yamaha Hatsudoki Kabushiki Kaisha, Iwata-shi, Shizuoka 438-8501 (JP)
(72) Inventor: IIZUKA, Shinya, Iwata-shi, Shizuoka 438-8501 (JP); IWAKI, Yohei, Iwata-shi, Shizuoka 438-8501 (JP); KOZU, Daisuke, Iwata-shi, Shizuoka 438-8501 (JP); HARANO, Kazuya, Iwata-shi, Shizuoka 438-8501 (JP)
(74) Representative: Stöckeler, Ferdinand
(86) International application number: PCT/JP2020/017297
(87) International publication number: WO 2020/241127

(56) References cited:
- EP-A1- 1 953 370
- WO-A1-2017/030130
- WO-A1-2017/030132
- WO-A1-2018/216758
- WO-A1-2019/013330
- WO-A1-2019/013330
- JP-A- 2011 111 133
- JP-B2- 4 722 470
- US-A1- 2011 130 932

## Description

### Technical Field

The present teaching relates to a straddled vehicle.

### Background Art

Straddled vehicles that run at torque from a power source include a type of straddled vehicle including power transmission members that have backlash therebetween and that are engaged with each other to transmit power. Examples of such straddled vehicles that are known include a straddled vehicle having a dog clutch. The dog clutch includes different types of dog elements as the power transmission members. The different types of dog elements include, for example, first dog elements and second dog elements that are engageable with each other. In this configuration, the first dog elements and the second dog elements are engaged with or disengaged from each other by moving relative to each other in a rotation axis direction. This switches the power between being transmitted and being disconnected. The first dog elements and the second dog elements in engagement have backlash therebetween in a circumferential direction. The backlash between the second dog elements and the first dog elements in the circumferential direction is set to a certain size that allows for smooth switching between power transmission and power disconnection.

In some cases where the driving state of the power source changes with an acceleration or a deceleration of the straddled vehicle, a shock can occur because of the backlash between the dog elements. For example, a shock occurs when the state of the power source is switched from a deceleration state (for example, engine braking activated state) to an acceleration state while the dog elements are in engagement. When the state of the power source is switched from the deceleration state to the acceleration state, for example, each of the first dog elements that is located between adjacent two of the second dog elements comes out of contact with one of the two second dog elements (non-transmission state) and moves over a distance corresponding to the backlash while accelerating. After having moved over the distance corresponding to the backlash, each of the first dog elements comes in contact with the other one of the two second dog elements (transmission state resulting from dog engagement). That is, the angular momentum gained by the first dog elements in the non-transmission state increases due to the acceleration while the state changes from the transmission state, in which the power is transmitted, to the non-transmission state, in which the power is not transmitted, and then changes back to the transmission state. As a result of the first and second dog elements recovering the contact therebetween, which allows the switching from the non-transmission state to the transmission state, the increased angular momentum is transmitted.

Consequently, the amount of change in the torque being outputted from a stepped transmission upon the recovered contact increases. This torque change is transmitted to a drive wheel, eventually causing a shock on the straddled vehicle.

Patent Literature (PTL) 1, for example, discloses an acceleration/deceleration control device that reduces at least one of a transmission torque or a speed of contact between power transmission members when backlash between the power transmission members is lost with an acceleration or a deceleration. This acceleration/deceleration control device detects information on the rotation speed of an input shaft of a specific target part in a power transmission path, and computes a relative rotational position between the input shaft and an output shaft based on the information on the rotation speed. The acceleration/deceleration control device then increases the speed of at least one of the input shaft or the output shaft to reduce at least one of the transmission torque or the speed of contact based on the computed relative rotational position. Thus, a shock resulting from the backlash can be reduced.

WO 2019/013330 A1 discloses a vehicle, in which a driving source torque control device controls a driving source torque on the basis of an acquired driving source torque so as to reduce at least one of the absolute value of a relative speed between a plurality of power transmission members when a slack between the power transmission members on a power transmission path is reduced, and of a transmission torque transmitted between the power transmission members when there is no more slack between the power transmission members on the power transmission path.

WO 2018/216758 A1 teaches a vehicle provided with a first transmission member and a second transmission member rotatably arranged relative to each other with play therebetween. The vehicle is provided with a drive source, a driven member, and a control device. The control device executes a power reduction process for reducing a transmitted torque when switching from a non-transmitting state to an acceleration-transmitting state. The control device performs control such that at least one process starts simultaneously with or prior to the switch, and at least one process ends after the switch from the non-transmitting state to the acceleration-transmitting state or deceleration-transmitting state.

US 2011/130932 A1 teaches a vehicle control system comprising a detector configured to detect a value of at least one of a relative rotational position and relative rotational speed of an input shaft and an output shaft. A controller is configured to execute control for accelerating or decelerating the input shaft or the output shaft to reduce at least one of a contact speed and transmission torque of the driving power transmission members based on the value detected by the detector, if a determiner determines that a driver has performed an acceleration or deceleration operation.

EP 1 953 370 A1 discloses an acceleration shock reduction control system for vehicle including a control unit, which gives, upon detecting a transition from a decelerating state to an accelerating state, an instruction for an ignition cut which is executed over a predetermined time period after a predetermined waiting time period elapses.

### Citation List

### Patent Literature

PTL 1: Japanese Patent No. 4722470

### Summary of Invention

### Technical Problem

In the case of a straddled vehicle, the degree of a vehicle behavior change due to an increase or a decrease in torque from a power source for the behavior varies depending on a running condition of the straddled vehicle. Such a straddled vehicle is desired to adjust a shock on the straddled vehicle resulting from backlash between power transmission members and accompanying an acceleration or a deceleration to a magnitude suitable for the running condition.

An objective of the present teaching is to provide a straddled vehicle including power transmission members having backlash therebetween, and being capable of adjusting a shock on the straddled vehicle resulting from the backlash between the power transmission members and accompanying an acceleration or a deceleration to a magnitude suitable for a running condition of the straddled vehicle.

### Solution to Problem

A straddled vehicle according to the present teaching has the following configuration.
(1) A straddled vehicle comprising:
   a power source configured to output a torque;
   a driven member configured to be driven by the power source to cause the straddled vehicle to run;
   a power transmission path configured to transmit the torque outputted from the power source to the driven member, the power transmission path including a first power transmission member and a second power transmission member having backlash therebetween and being movable relative to each other, the first power transmission member and the second power transmission member being configured to transmit power when in a transmission state in which the first and second power transmission members are in engagement with each other, and being configured to not transmit power when in a non-transmission state in which the first and second power transmission members are not in engagement with each other; and
   a control device having an acquisition unit and a control unit,
      the acquisition unit being configured to acquire at least one parameter indicating a degree of a vehicle behavior change of the straddled vehicle, the behavior change being feasible due to an increase or a decrease in the torque from the power source,
      the control unit being configured, in a torque change period, to perform a change process for change of the torque being outputted from the power source, the change process being carried out based on the at least one parameter, the torque change period including at least a part of a non-transmission period that is from a first timing until a second timing being a switching of the first and second power transmission members from the non-transmission state to the transmission state. The acquisition unit is configured to acquire, as the parameter indicating the degree of a vehicle behavior change of the straddled vehicle, the vehicle behavior change being feasible due to an increase or a decrease in the torque from the power source, a parameter related to at least one of the following: (a) a physical quantity related to a turning state of the straddled vehicle (1); (b) a pitch angle between an axis of the straddled vehicle (1) in a front-back direction of the straddled vehicle (1) and a horizontal plane; or (c) a coefficient of friction against a road surface (Q) on which the straddled vehicle (1) is running.

The straddled vehicle having the configuration described above includes the control device and the power transmission path that transmits the torque outputted from the power source to the driven member. The power transmission path includes the first power transmission member and the second power transmission member having backlash therebetween and being movable relative to each other. The first power transmission member and the second power transmission member transmit power when in the transmission state in which the first and second power transmission members are in engagement with each other. The first power transmission member and the second power transmission member do not transmit power when in the non-transmission state in which the first and second power transmission members are not in engagement with each other.

The control device of the straddled vehicle has the acquisition unit and the control unit. The acquisition unit acquires a parameter indicating the degree of a vehicle behavior change. Alternatively, the acquisition unit acquires a parameter indicating a running condition of the straddled vehicle that is likely to generate an acceleration or a deceleration of the straddled vehicle.

The control unit performs, in the torque change period, the change process to change the torque being outputted from the power source. The torque change period includes at least a part of the non-transmission period from when the first and second power transmission members have been switched from the transmission state to the non-transmission state with an acceleration or a deceleration of the straddled vehicle until when the first and second power transmission members have been switched from the non-transmission state to the transmission state. The control unit changes the torque being outputted form the power source based on the parameter.

In the torque change period, the change process to change the torque being outputted from the power source is performed.
The torque being outputted from the power source is changed based on the parameter indicating the running condition. This reduces the magnitude of a shock to be transmitted from the power transmission path to the driven member due to the switching from the non-transmission state to the transmission state. Besides, the amount of the reduction varies depending on the running condition of the straddled vehicle.

As such, the straddled vehicle having the configuration described above includes the power transmission members having backlash therebetween, and is capable of adjusting a shock on the straddled vehicle resulting from the backlash between the power transmission members and accompanying an acceleration or a deceleration to a magnitude suitable for the running condition of the straddled vehicle.

In the straddled vehicle having the configuration described above, the torque being outputted from the power source is changed based on at least one of the following factors: (a) the physical quantity related to the turning state of the straddled vehicle; (b) the pitch angle between the axis of the straddled vehicle in the front-back direction of the straddled vehicle and a horizontal plane; or (c) the coefficient of friction against a road surface on which the straddled vehicle is running. According to the straddled vehicle having the configuration described above, it is possible to adjust a shock on the straddled vehicle to a magnitude suitable for the element indicating the running condition of the straddled vehicle.

(2) The straddled vehicle according to (1), wherein
the acquisition unit acquires, as the at least one parameter indicating the degree of a vehicle behavior change being feasible due to an increase or a decrease in the torque from the power source, a parameter indicating a physical quantity related to a turning state of the straddled vehicle, and
the control unit changes the torque from the power source based on the parameter indicating the physical quantity related to the turning state of the straddled vehicle that has been acquired by the acquisition unit.

In the straddled vehicle having the configuration described above, the torque from the power source is changed based on the physical quantity related to the turning state of the straddled vehicle. According to the straddled vehicle having the configuration described above, it is possible to adjust a shock on the straddled vehicle to a magnitude suitable for the state of the turning straddled vehicle.

(3) The straddled vehicle according to any one of (1) or (2), wherein
the acquisition unit further acquires a parameter indicating a running condition of the straddled vehicle being possible to generate an acceleration or a deceleration of the straddled vehicle, a parameter indicating a distance between the straddled vehicle and an in-front vehicle running ahead of the straddled vehicle in a front-back direction of the straddled vehicle, and
the control unit changes the torque from the power source based on the parameter indicating the distance between the straddled vehicle and the in-front vehicle that has been acquired by the acquisition unit.

According to the straddled vehicle having the configuration described above, an acceleration or a deceleration of the straddled vehicle that can result from an increase or a decrease in the torque from the power source is based on the distance between the straddled vehicle and the in-front vehicle. The magnitude and the frequency of shocks on the straddled vehicle therefore vary depending on the distance between the straddled vehicle and the in-front vehicle. For example, the longer the distance between the straddled vehicle and the in-front vehicle, the less frequently the torque from the power source is likely to be increased or reduced depending on the running condition of the in-front vehicle.

By contrast, the shorter the distance between the straddled vehicle and the vehicle ahead, the more frequently the torque from the power source is likely to be increased or reduced depending on the running condition of the vehicle ahead. That is, the number of accelerations and decelerations of the straddled vehicle are more likely to increase. According to the straddled vehicle having the configuration described above, it is possible to adjust a shock on the straddled vehicle to a magnitude suitable for the distance between the straddled vehicle and the vehicle ahead.

(4) The straddled vehicle according to any one of (1) to (3), wherein
the acquisition unit acquires, as the at least one parameter indicating the degree of a vehicle behavior change being feasible due to an increase or a decrease in the torque from the power source, a parameter indicating a pitch angle between an axis of the straddled vehicle in a front-back direction of the straddled vehicle and a horizontal plane, and
the control unit changes the torque from the power source based on the parameter indicating the pitch angle that has been acquired by the acquisition unit.

In the straddled vehicle having the configuration described above, the degree of a vehicle behavior change being feasible due to an increase or a decrease in the torque from the power source varies depending on the pitch angle between the axis of the straddled vehicle in the front-back direction of the straddled vehicle and the horizontal plane. When the straddled vehicle is running downhill, for example, the degree of acceleration or deceleration of the straddled vehicle easily changes due to a small increase or a small decrease in the torque from the power source. According to the straddled vehicle having the configuration described above, it is possible to adjust a shock on the straddled vehicle to a magnitude suitable for the pitch angle of the straddled vehicle.

(5) The straddled vehicle according to any one of (1) to (4), wherein
the acquisition unit acquires, as the at least one parameter indicating the degree of a vehicle behavior change being feasible due to an increase or a decrease in the torque from the power source, a parameter indicating a coefficient of friction against a road surface on which the straddled vehicle is running, and the control unit changes the torque from the power source based on the parameter indicating the coefficient of friction that has been acquired by the acquisition unit.

In the straddled vehicle having the configuration described above, the torque from the power source is changed based on the coefficient of friction of the straddled vehicle against a road surface. According to the straddled vehicle having the configuration described above, it is possible to adjust a shock on the straddled vehicle to a magnitude suitable for the coefficient of friction of the straddled vehicle against a road surface.

(6) The straddled vehicle according to any one of (1) to (5), wherein
the control unit acquires a target change value to which the torque from the power source is to be changed, and changes the torque from the power source in accordance with the target change value in the torque change period, and
the target change value includes a torque design component set depending on the at least one parameter and a shock reduction component set to reduce a shock to be transmitted with the switching from the non-transmission state to the transmission state, the shock reduction component being independent of the at least one parameter.

According to the straddled vehicle having the configuration described above, the target change value to which the torque from the power source is to be changed includes the shock reduction component for reducing the torque from the power source so as to reduce the torque being transmitted between the first power transmission member and the second power transmission member. Thus, a shock to be transmitted through the power transmission path decreases. The target change value also includes the torque design component set depending on the parameter. While reducing the shock on the straddled vehicle, therefore, it is possible to adjust the shock being reduced to a magnitude suitable for the running condition of the straddled vehicle.

(7) The straddled vehicle according to (2),
the straddled vehicle being configured to turn while leaning, and lean in a leftward direction of the straddled vehicle while making a left turn and lean in a rightward direction of the straddled vehicle while making a right turn, wherein
the acquisition unit acquires the physical quantity related to the turning state based on a lean angle of the straddled vehicle.

The lean posture of the straddled vehicle having the configuration described above during a turn varies depending on the torque transmitted to the driven member. According to the straddled vehicle having the configuration described above, it is possible to adjust a shock to be transmitted through the power transmission path to a magnitude suitable for the posture of the turning straddled vehicle depending on the lean angle of the straddled vehicle.

(8) The straddled vehicle according to any one of (1) to (7), wherein
the control unit controls a time to start the change process to cause the change process to be started at the same time as or before the second timing, and controls a time to end the change process to cause the change process to be ended after the second timing, the second timing being the switching from the non-transmission state to the transmission state.

The change process reduces the torque being transmitted between the first power transmission member and the second power transmission member at least in a period from when the first and second power transmission members have been engaged with each other until when the angular momentum due to a rotation speed difference between the two transmission members becomes manifest as a change in the speed of the straddled vehicle. That is, the torque being transmitted between the first power transmission member and the second power transmission member is reduced in the period during which the power source outputs the angular momentum due to the speed difference between the first power transmission member and the second power transmission member. Thus, the angular momentum that is actually outputted by the power source is reduced, for example, to the extent that the outputted angular momentum can be caught by a damper component or the like in the power transmission path. As a result, impact on the straddled vehicle is reduced. Even if the torque being transmitted is reduced after the second timing, which the second timing being the switching from the non-transmission state to the transmission state, the impact on the straddled vehicle is reduced. In this case, for example, the speed difference between the first and second power transmission members does not have to be substantially eliminated at the time of the engagement. That is, it is not necessary to reduce the torque from the power source for a long period of time before the engagement. It is therefore possible to improve acceleration responsiveness compared to a case where, for example, the speed difference between the first and second power transmission members is substantially eliminated, while adjusting a shock to be transmitted through the power transmission path to a magnitude suitable for the running condition of the straddled vehicle.

The degree of a vehicle behavior change being feasible due to an increase or a decrease in the torque from the power source, a running condition of the straddled vehicle being likely to generate an acceleration or a deceleration is expressed, for example, as the physical quantity related to the turning state of the straddled vehicle. However, the running condition is not limited as such.

The vehicle behavior change being feasible due to an increase or a decrease in the torque from the power source means a change in a vehicle behavior that is likely to result from an increase or a decrease in the torque from the power source. However, the degree of a vehicle behavior change being feasible due to an increase or a decrease in the torque from the power source does not solely depend on the degree of a change in the torque from the power source. This is because the vehicle behavior change being feasible due to an increase or a decrease in the torque from the power source also depends on factors other than an increase or a decrease in the torque from the power source. Examples of factors other than an increase or a decrease in the torque include the physical quantity related to the turning state of the straddled vehicle, the pitch angle of the vehicle, and the coefficient of friction against a road surface.

A plurality of second power transmission members may be arranged in a circle at an interval in a circumferential direction, and the interval may be longer than a circumferential length of a plurality of first power transmission members. In such a case, each of the first power transmission members is disposed between adjacent ones of the second power transmission members with a space between the first power transmission member and the adjacent second power transmission members. Such a space is referred to as backlash (backlash between transmission members). When the state of the power source is switched from a deceleration state to an acceleration state, for example, the first power transmission member that is located between the two adjacent second power transmission members comes out of contact with one of the two second power transmission members, and then comes in contact with the other one, which is the opposite one, of the two second power transmission members. Thus, the first power transmission members and the second power transmission members are engaged with each other. A distance over which the first power transmission member moves away from the one of the two second power transmission members until the first power transmission member is engaged with the other one, which is the opposite one, of the two second power transmission members is the backlash.

The power transmission path including the first power transmission member and the second power transmission member is, for example, a transmission, a clutch, a chain, or a sprocket.

The physical quantity related to the turning state is, for example, a turning speed. However, the physical quantity related to the turning state is not limited thereto, and may be, for example, a lean angle.

The turning speed represents, for example, an angular velocity of a turn around a vertical axis passing through the center of gravity of the straddled vehicle. The turning speed is acquired, for example, from a yaw rate. However, in the case of the straddled vehicle being a lean vehicle, the turning speed may be acquired, for example, based on the angular velocity of a turn around an up-down line that passes vertically through the center of gravity of the straddled vehicle in an upright state and tilts as the straddled vehicle leans in a left-right direction. Furthermore, in the case of the straddled vehicle being a lean vehicle, the physical quantity related to the turning state may be expressed, for example, as a lean angle of the straddled vehicle in the left-right direction.

A plurality of first power transmission members and a plurality of second power transmission members may be, for example, used in a stepped transmission. In such a case, the first power transmission members are provided on either a driving gear or a driven gear. The second power transmission members make contact with the first power transmission members in the circumferential direction with backlash therebetween. That is, the second power transmission members have a shape that provides backlash for the first power transmission members when each of the second power transmission members is located within a space between corresponding ones of the first power transmission members that are adjacent to each other in the circumferential direction. Furthermore, the second power transmission members move in the circumferential direction relative to the first power transmission members to come in contact with the first power transmission members in the circumferential direction. The second power transmission members may be provided on either the drive gear or the driven gear. Alternatively, the second power transmission members may be provided on a power transmission member ring, which is a different member from the drive gear and the driven gear. The first power transmission members or the second power transmission members may be protrusions or sidewall parts defining holes or grooves in which the mating power transmission members are fitted. In a gear stage setting mechanism, gear stages are provided with the first power transmission members and the second power transmission members. However, this does not necessarily mean that the gear stage setting mechanism has a different set of first power transmission members and second power transmission members for each of the gear stages. The gear stage setting mechanism may have any configuration as long as the gear stage setting mechanism has the first power transmission members and the second power transmission members in a manner that mechanically and selectively enables power transmission in each of the gear stages. For example, one power transmission member ring serving as the second power transmission members may be provided for two gear stages.

The circumferential direction in which the first power transmission members and the second power transmission members are in contact with each other extends along a rotation direction of the drive gear or the driven gear on which the first power transmission members are provided.

The parameter indicating the degree of a possible vehicle behavior change due to an increase or a decrease in the torque form the power source, or a running condition of the straddled vehicle that is likely to cause an acceleration or a deceleration of the straddled vehicle is related to at least one of (a) to (d) described below.
(a) Physical quantity related to a turning state of the straddled vehicle
(b) Pitch angle between the axis of the straddled vehicle in the front-back direction of the straddled vehicle and a horizontal plane
(c) Distance between the straddled vehicle and an in-front vehicle running ahead of the straddled vehicle in the front-back direction of the straddled vehicle
(d) Coefficient of friction against a road surface on which the straddled vehicle is running

The physical quantity related to the turning state is, for example, a turning speed, a lean angle, a steering force, a steering torque, or curve information of the road on which the straddled vehicle is running.

The turning speed is acquired using, for example, an IMU (Inertial Measurement Unit). In the case of the straddled vehicle being a lean vehicle, for example, the turning speed can be calculated from the lean angle and the speed of the lean vehicle. The turning speed may alternatively be acquired based on a shift of the center of gravity of a rider. The turning speed may alternatively be acquired based on the steering angle. The turning speed may alternatively be acquired based on the amount of change in yaw angle. The turning speed may alternatively be acquired based on the acceleration rate in the left-right direction of the straddled vehicle. The turning speed may alternatively be acquired, for example, based on a speed difference (rotation speed difference) between front and rear wheels. The turning speed may alternatively be acquired, for example, based on the amount of change in an external environment acquired by a camera, a laser radar, or a millimeter wave radar.

The steering force and the steering torque can be acquired, for example, using a torque sensor provided in a steering part or a pressure sensor provided in a grip part. The curve information of the road on which the straddled vehicle is running can be acquired, for example, by referring to map information or through road-to-vehicle communication.

The pitch angle is acquired using, for example, the IMU. Alternatively, the pitch angle may be acquired by estimating the direction of gravitational acceleration using a shock absorber stroke sensor. The pitch angle may alternatively be acquired based on a difference between a target acceleration rate calculated based on a command value for the output torque from the power source and an actual acceleration rate of the straddled vehicle detected by a vehicle speed sensor. The pitch angle may alternatively be acquired through road-to-vehicle communication. The pitch angle may alternatively be acquired, for example, by referring to slope information of the road. The slope information is obtained from map information or through road-to-vehicle communication. The pitch angle may alternatively be acquired, for example, based on a position of the center of gravity of the rider. The pitch angle may alternatively be acquired, for example, based on the amount of change in an external environment acquired by a camera, a laser radar, or a millimeter wave radar.

The distance between the straddled vehicle and a vehicle running ahead of the straddled vehicle in the front-back direction of the straddled vehicle is acquired using, for example, a laser radar device. The laser radar device emits radio waves and acquires a position thereof using reflection of the radio waves from a target.

The distance between the straddled vehicle and a vehicle ahead may alternatively be acquired using an image recognition device. The image recognition device uses an image forward of the straddled vehicle captured by a camera, recognizes an identifier of another vehicle in the image, and acquires the distance to the other vehicle.

The distance between the straddled vehicle and a vehicle running ahead of the straddled vehicle in the front-back direction of the straddled vehicle may be acquired using, for example, a vehicle-to-vehicle communication device. The vehicle-to-vehicle communication device is also provided in the vehicle running ahead, and the distance between the straddled vehicle and the vehicle ahead can be acquired by acquiring position information through communication between the vehicle-to-vehicle communication devices in the vehicles. Alternatively, the distance between the straddled vehicle and a vehicle running ahead of the straddled vehicle in the front-back direction of the straddled vehicle may be acquired by, for example, estimating the distance based on traffic information acquired from GPS information.

The coefficient of friction against a road surface on which the straddled vehicle is running can be acquired, for example, from the road surface roughness. The road surface roughness is acquired, for example, from the pitch angle and the pitch rate of the straddled vehicle, or from the acceleration rate of the straddled vehicle in the up-down direction. The pitch angle, the pitch rate, and the acceleration rate can be acquired using an IMU provided in the straddled vehicle. Alternatively, the pitch angle, the pitch rate, and the acceleration rate may be estimated using, for example, a shock absorber stroke sensor provided in the straddled vehicle.

The road surface roughness may alternatively be acquired, for example, from information outputted by a camera, a laser radar, or a millimeter wave radar.

The coefficient of friction against a road surface on which the straddled vehicle is running can be acquired, for example, from the wheelspin rate, which is the degree of wheelspin of the driven member of the straddled vehicle. The wheelspin rate of the driven member of the straddled vehicle is acquired based on the rotation speed of the driven member and the speed of the straddled vehicle acquired from the IMU. The wheelspin of the wheel may alternatively be detected, for example, from a change in the rotation speed of the wheel of the straddled vehicle.

The coefficient of friction against a road surface on which the straddled vehicle is running may be acquired, for example, as an estimated value sent from a device external to the straddled vehicle through communication. For example, the device external to the straddled vehicle has map information that includes information of friction coefficients associated with locations where the straddled vehicle can run. The map information is acquired beforehand through surveys. The external device acquires the position of the straddled vehicle from the straddled vehicle through communication and refers to the map information using the acquired position to acquire an estimated friction coefficient value corresponding to the position of the straddled vehicle. Note here that the device external to the straddled vehicle may be, for example, a device capable of road-to-vehicle communication. The straddled vehicle acquires the estimated friction coefficient value through the communication. The map information including information of friction coefficients may be provided in the straddled vehicle. In this case, the straddled vehicle acquires the estimated friction coefficient value by, for example, referring to the map information based on the position of the straddled vehicle acquired through a global positioning system. The coefficient of friction may be corrected using, for example, weather information.

The coefficient of friction against a road surface on which the straddled vehicle is running can be acquired, for example, from tire information such as brand name, degree of deterioration, temperature, or air pressure of tires. The brand name or the degree of deterioration of the tires can be acquired from information registered with an interface tool by a user at times of tire replacement. The temperature or the air pressure can be acquired using sensors provided on wheels. Alternatively, the coefficient of friction against a road surface on which the straddled vehicle is running may be estimated from the color or the reflection state of the road surface acquired by a camera.

No particular limitations are placed on the range of values of the parameter indicating the running condition of the straddled vehicle. The parameter is set, for example, in a range of 0 to 100. However, the range and the number of levels of the parameter are not particularly limited. For example, the parameter may have 100 or more levels, or less than 100 levels. The parameter may have three levels, which may be, for example, large, medium, and small.

The control unit changes the torque being outputted form the power source based on one parameter. However, the control unit may change the torque being outputted from the power source based on a combination of two or more parameters. The control unit may, for example, modify the torque using a weighted average of each parameter.

The target torque change value may include the shock reduction component and the torque design component. The shock reduction component is a component for reducing the output torque from the power source when the straddled vehicle accelerates. The torque design component may be a component for increasing or reducing the output torque from the power source more than the shock reduction component when the straddled vehicle accelerates. The shock reduction component is a component for increasing the output torque from the power source when the straddled vehicle decelerates. The torque design component may be a component for increasing or reducing the output torque from the power source more than the shock reduction component when the straddled vehicle decelerates.

In the following description, a state (A) refers to a state in which neither the shock reduction component nor the torque design component is acting on the output torque from the power source. A state (B) refers to a state in which the shock reduction component is acting on the output torque from the power source, but the torque design component is not acting thereon. A state (C) refers to a state in which both the shock reduction component and the torque design component are acting on the output torque from the power source.

In regard to the amount of change in the output torque that occurs when the first power transmission member and the second power transmission member are engaged, for example, the shock reduction component is set so that the amount of change is smaller in the state (B) than in the state (A). Preferably, the torque design component is set, for example, so that the amount of change is smaller in the state (C) than in the state (B). However, the torque design component may be set so that the amount of change in the state (C) is greater than or equal to the amount of change in the state (B). Even in such a case, the torque design component is preferably set so that the amount of change is smaller in the state (C) than in the state (A).

In regard to the rate of change in the output torque over time (a derivative with respect to time) when the first power transmission member and the second power transmission member are engaged, the shock reduction component is set, for example, so that the rate of change over time is smaller in the state (B) than in the state (A). Preferably, the torque design component is set, for example, so that the rate of change over time is smaller in the state (C) than in the state (B). However, the torque design component may be set so that the rate of change over in the state (C) is greater than or equal to the rate of change over time in the state (B). Even in such a case, the torque design component is preferably set so that the rate of change over time is smaller in the state (C) than in the state (A).

The power source is, for example, an engine or an electric motor. That is, the straddled vehicle is, for example, an engine vehicle, an electric vehicle, or an engine-motor hybrid vehicle.

In the case of the power source being an engine, for example, the torque from the power source can be increased by increasing the volume of air being supplied to the engine. Alternatively, or additionally, the torque from the power source can be increased by increasing a fuel being supplied to the engine. For example, the torque from the power source can be increased by increasing the fuel being supplied to the engine so that the amount of the fuel is greater than in a stoichiometry state.

The term "straddled vehicle" means a type of vehicle in which a driver straddles a saddle when seated. Examples of straddled vehicles include a lean vehicle. The lean vehicle turns while leaning. Specifically, the lean vehicle leans in the leftward direction of the vehicle while making a left turn and leans in the rightward direction of the vehicle while making a right turn. The straddled vehicle is, for example, a motorcycle. No particular limitations are placed on the motorcycle, and examples thereof include scooters, mopeds, off-road motorcycles, and on-road motorcycles. The straddled vehicle is not limited to lean vehicles, and may be, for example, any vehicle such as an ATV (All-Terrain Vehicle). The straddled vehicle including transmission members having backlash therebetween is preferably configured to turn while leaning. The straddled vehicle configured to turn while leaning is configured to turn along a curve with a posture thereof leaning toward the center of the curve in order to counter centrifugal force exerted on the straddled vehicle during the turn. The straddled vehicle leans toward the center of the curve through manipulation (for example, weight shifting) by the driver. Due to the fact that the posture of the straddled vehicle is controlled by the driver, it is preferable that a shock to be exerted on the straddled vehicle be reduced, and the straddled vehicle have high acceleration and deceleration responsiveness. It is also preferable that the size and the weight of instruments and devices mounted in the straddled vehicle be reduced. From this perspective, it is preferable that the stepped transmission provides high design flexibility. In the case of a transmission adopting a structure that can lead to a decrease in mechanical strength as described above, for example, maintaining the mechanical strength can require a size increase or reinforcement. This is one example in which the design flexibility is restricted by the structure of the stepped transmission. Restricted design flexibility can affect the size reduction and the weight reduction. By contrast, the present teaching can increase the design flexibility and is suitably applicable to straddled vehicles configured to turn while leaning. In particular, in regard to a straddled vehicle including transmission members having backlash therebetween, the present teaching further improves the acceleration and deceleration responsiveness while reducing a shock on the straddled vehicle resulting from the backlash between the transmission members and accompanying a change in state of a power source, as described below. Since the posture of a straddled vehicle configured to turn while leaning is controlled by a driver thereof, the driver easily feels the behavior of the straddled vehicle. It is therefore preferable that a shock to be exerted on the straddled vehicle configured to turn while leaning be reduced, and the straddled vehicle have high acceleration and deceleration responsiveness. From this point of view, the present teaching is suitable for straddled vehicles configured to turn while leaning. Examples of straddled vehicles configured to turn while leaning include straddled vehicles configured to turn while leaning (for example, motorcycles and three-wheeled vehicles).

The driven member is, for example, a drive wheel of the vehicle. That is, the straddled vehicle has a drive wheel. However, the straddled vehicle may alternatively be a vehicle that does not have a drive wheel, such as a snowmobile. The driven member is not particularly limited, and may be, for example, a continuous belt or a propeller.

The control device may have a processor that executes a program, or may be an electronic circuit.

### Advantageous Effects of Invention

According to the present teaching, it is possible to provide a straddled vehicle that includes transmission members having backlash therebetween, and that has further improved acceleration and deceleration responsiveness, with the ability to reduce impact thereon resulting from the backlash between the transmission members and accompanying a change in the state of a power source thereof.

### Brief Description of Drawings

[FIG. 1] A diagram illustrating a straddled vehicle according to a first embodiment of the present teaching.
[FIG. 2] An external view of the straddled vehicle illustrated in FIG. 1.
[FIG. 3] A diagram illustrating a schematic configuration involved in driving of the straddled vehicle illustrated in FIG. 2.
[FIG. 4(A)] (A) is a diagram illustrating a driven gear and a dog ring in a non-transmission state. (B) is a diagram illustrating the driven gear and the dog ring in a transmission state. (C) is a circumferential partial cross-sectional view of the driven gear and the dog ring in the transmission state.
[FIG. 5] A diagram illustrating a configuration of a control device illustrated in FIG. 3.
[FIG. 6] A diagram showing functional blocks of the control device illustrated in FIG. 5.
[FIG. 7] A flowchart showing an operation of the control device illustrated in FIG. 5.
[FIG. 8] A flowchart for explaining details of a torque change process shown in FIG. 7.
[FIG. 9] A schematic diagram for explaining a state of the straddled vehicle that is turning.
[FIG. 10] A schematic diagram illustrating a plurality of states that are different in degree of a possible vehicle behavior change due to an increase or a decrease in torque from a power source.
[FIG. 11] A time chart showing torque change.
[FIG. 12] A plan view of the straddled vehicle for schematically illustrating a turning state thereof.
[FIG. 13] A plan view for schematically illustrating a positional relationship between an in-front vehicle and a straddled vehicle according to a second embodiment.
[FIG. 14] A schematic diagram illustrating a plurality of states that are different in distance to the vehicle ahead.
[FIG. 15] A side view of the straddled vehicle 1 according to a third embodiment for schematically illustrating a pitch angle thereof.
[FIG. 16] A schematic diagram illustrating a plurality of states that are different in pitch angle.
[FIG. 17] A side view of the straddled vehicle 1 according to a fourth embodiment for schematically illustrating a coefficient of friction thereof.
[FIG. 18] A schematic diagram illustrating the straddled vehicle 1 running on road surfaces that are different in coefficient of friction.

### Description of Embodiments

The following describes the present teaching based on embodiments thereof with reference to the drawings.

### [First Embodiment]

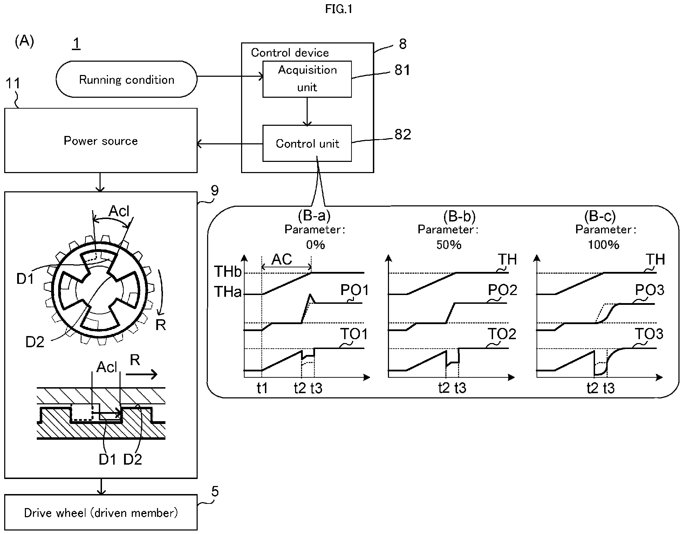

FIG. 1 is a diagram illustrating a straddled vehicle according to a first embodiment of the present teaching. Part (A) of FIG. 1 is a block diagram illustrating a configuration of the straddled vehicle. Part (B-a), Part (B-b), and Part (B-c) of FIG. 1 are each a time chart showing torque change.

A straddled vehicle 1 illustrated in FIG. 1 includes a power source 11, a drive wheel 5, which is a driven member, a power transmission path 9, and a control device 8.

The power source 11 outputs a torque. More specifically, the power source 11 outputs power including a torque and a rotation speed. The drive wheel 5 of the straddled vehicle 1 is supplied with the power outputted from the power source 11 and is driven by the power. The straddled vehicle 1 runs while being driven by the drive wheel 5.

The power transmission path 9 transmits the torque outputted from the power source 11 to the drive wheel 5. The power transmission path 9 has first power transmission members D1 and second power transmission members D2. The first power transmission members D1 and the second power transmission members D2 are, for example, dog elements that make dog engagement with each other.

The first power transmission members D1 and the second power transmission members D2 have backlash therebetween and are movable relative to each other. The first power transmission members D1 and the second power transmission members D2 illustrated in Part (A) of FIG. 1 have a backlash angle Acl therebetween.

The first power transmission members D1 and the second power transmission members D2 have a transmission state and a non-transmission state. In the transmission state, the first power transmission members D1 and the second power transmission members D2 are in engagement with each other. The first power transmission members D1 and the second power transmission members D2 transmit the power in the transmission state. In the non-transmission state, the first power transmission members D1 are out of contact with the second power transmission members D2. The first power transmission members D1 and the second power transmission members D2 do not transmit the power in the non-transmission state.

The control device 8 controls the power source 11. The control device 8 controls the torque being outputted from the power source 11. The control device 8 has an acquisition unit 81 and a control unit 82.

The acquisition unit 81 acquires at least one parameter. The parameter indicates the degree of a vehicle behavior change being feasible due to an increase or a decrease in the torque from the power source 11. The acquisition unit 81 acquires the parameter indicating the running condition of the straddled vehicle 1 using a sensor or a measuring device provided in the straddled vehicle 1. The straddled vehicle 1 may include various sensors and measuring devices, which are described in detail below.

The parameter indicates, any of the following running conditions (a), (b) and (d) of the straddled vehicle 1.

### (a) Physical quantity related to a turning state of the straddled vehicle 1

The physical quantity related to the turning state is, for example, a turning speed. The physical quantity related to the turning state may be, for example, a physical quantity that includes a turning speed or a lean angle (roll angle).

The turning speed indicates a running condition of the straddled vehicle 1 that causes a vehicle behavior change being feasible due to an acceleration or a deceleration (an increase or a decrease in speed) of the straddled vehicle.

For example, the degree of change in posture of the straddled vehicle 1 that is running is greater when the straddled vehicle 1 is turning than when the straddled vehicle 1 is not turning. The degree of the vehicle behavior change of the running straddled vehicle 1 being feasible due to an increase or a decrease in the torque increases with an increase in the turning speed.

### (b) Pitch angle between an axis of the straddled vehicle 1 in a front-back direction of the straddled vehicle 1 and a horizontal plane

The pitch angle indicates a running condition of the straddled vehicle 1 that causes a vehicle behavior change being feasible due to an acceleration or a deceleration (increase and decrease in speed) of the straddled vehicle. In other words, the pitch angle indicates the degree of a vehicle behavior change being feasible due to an increase or a decrease in the torque from the power source 11.

The degree of the vehicle behavior change being feasible due to an increase or a decrease in the torque from the power source 11 increases with an increase in the pitch angle.

### (c) Distance between the straddled vehicle 1 and an in-front vehicle running ahead of the straddled vehicle 1 in the front-back direction of the straddled vehicle 1

The parameter indicating the distance between the straddled vehicle 1 and the vehicle ahead indicates a running condition of the straddled vehicle 1 being likely to generate an acceleration or a deceleration of the straddled vehicle 1.

A shorter distance between the straddled vehicle 1 and the in-front vehicle is more likely to generate an acceleration and a deceleration of the running straddled vehicle 1.

### (d) Coefficient of friction against a road surface on which the straddled vehicle 1 is running

The coefficient of friction of the straddled vehicle 1 against a road surface indicates the degree of a vehicle behavior change.

The degree of the vehicle behavior change of the straddled vehicle 1 increases with a decrease in the coefficient of friction against the road surface.

Accordingly, a smaller coefficient of friction against the road surface means a larger value of the running condition-indicating parameter.

The running condition-indicating parameter according to the present embodiment is expressed as a numerical value of 0% to 100% for ease of control.

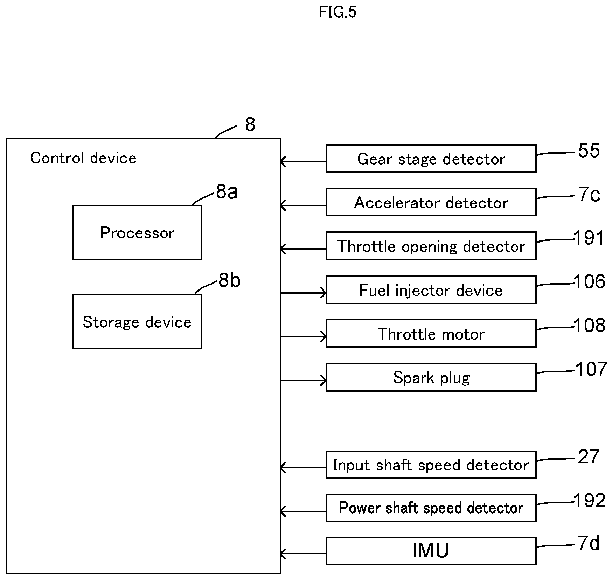

The control unit 82 controls the power source 11. The control unit 82 controls, for example, the torque being outputted from the power source 11 in accordance with the amount of manipulation of an accelerator operator 7b detected by an accelerator detector 7c (see FIG. 5). For example, the control unit 82 increases the torque being outputted from the power source 11 in response to an acceleration manipulation of the accelerator operator 7b. The control unit 82 reduces the torque being outputted from the power source 11 in response to a deceleration manipulation of the accelerator operator 7b.

However, the control unit 82 changes the torque being outputted from the power source 11 based on the at least one parameter in a torque change period accompanying an acceleration or a deceleration of the straddled vehicle 1.

For example, the control unit 82 temporarily reduces the torque being outputted from the power source 11 in the torque change period accompanying an acceleration of the straddled vehicle 1. For a larger value of the parameter, for example, the control unit 82 causes a larger amount of decrease in the torque being outputted from the power source 11. For a smaller value of the parameter, for example, the control unit 82 causes a smaller amount of decrease in the torque being outputted from the power source 11.

For another example, the control unit 82 temporarily increases the torque being outputted from the power source 11 in the torque change period accompanying a deceleration of the straddled vehicle 1. For a larger value of the parameter, for example, the control unit 82 causes a larger amount of increase in the torque being outputted from the power source 11. For a smaller value of the parameter, for example, the control unit 82 causes a smaller amount of increase in the torque being outputted from the power source 11.

Parts (B-a) to (B-c) of FIG. 1 are time charts showing changes in the torque being outputted from the power source 11. Parts (B-a) to (B-c) of FIG. 1 show changes in the torque under conditions that are different in the value of the parameter. The parameter varies from 0%, which leads to the minimum degree of the possible vehicle behavior change, to 100%, which leads to the maximum degree of the possible vehicle behavior change. Part (B-a) of FIG. 1 shows a case where the value of the running condition-indicating parameter is 0%. Part (B-b) of FIG. 1 shows a case where the value of the running condition-indicating parameter is 50%. Part (B-c) of FIG. 1 shows a case where the value of the running condition-indicating parameter is 100%.

Parts (B-a) to (B-c) of FIG. 1 each show a throttle opening TH, a drive torque PO of the drive wheel 5, and a torque TO outputted from the power source 11.

Parts (B-a) to (B-c) of FIG. 1 all show changes accompanying an acceleration. The throttle opening TH is the same for all of the cases shown in Parts (B-a) to (B-c) of FIG. 1, and increases from THa to THb in an acceleration period AC. This increase switches the state of the power source 11 from a deceleration state to an acceleration state. The torque TO being outputted from the power source 11 increases as the throttle opening TH increases.

When the state of the power source 11 is switched from the deceleration state to the acceleration state, each of the first power transmission members D 1 that is located between adjacent two of the second power transmission members D2 as shown in Part (A) of FIG. 1 comes out of contact with one of the two second power transmission members D2 (non-transmission state), moves over a distance corresponding to the backlash while accelerating, and then comes in contact with the other one, which is the opposite one, of the two second power transmission members D2 (transmission state resulting from dog engagement). That is, the angular momentum gained by the first power transmission member D 1 in the non-transmission state increases due to the acceleration while the state of the power transmission members changes from the transmission state, in which the power is transmitted, to the non-transmission state, in which the power is not transmitted, and then changes back to the transmission state. As a result of the first and second power transmission members D1 and D2 recovering the contact therebetween, which allows the switching from the non-transmission state to the transmission state, the increased angular momentum is transmitted to the second power transmission members D2. A non-transmission period from when the first and second power transmission members D1 and D2 have been switched from the transmission state to the non-transmission state until when the first and second power transmission members D1 and D2 have been switched from the non-transmission state to the transmission state is referred to as a torque change period.

The amount of change in the drive torque PO of the drive wheel 5 upon the recovered contact increases as a result of the first power transmission members D1 moving over the distance corresponding to the backlash. This results in a shock on the straddled vehicle 1. The shock on the straddled vehicle 1 appears in Parts (B-a) to (B-c) of FIG. 1 as a reduction in time it takes for the drive torque PO to change and an overshoot of the change.

The control unit 82 for the power source 11 temporarily reduces the torque being outputted from the power source 11 by timing this reduction with the recovery of the contact between the first power transmission members D1 and the second power transmission members D2. This reduces the shock due to the switching of the first power transmission members D1 and the second power transmission members D2 from the non-transmission state to the transmission state. More specifically, the torque is reduced in the torque change period, which is the non-transmission period.

The torque TO being outputted from the power source 11 is kept reduced during a period from a time t2 to a time t3 shown in each of Parts (B-a) to (B-c) of FIG. 1.

In Part (B-a) of FIG. 1, the change in torque TO1 from the power source 11 is indicated by a solid line.

Part (B-a) of FIG. 1 shows the case where the value of the running condition-indicating parameter is 0%, which is smaller than in the case shown in Part (B-b) of FIG. 1 where the value of the running condition-indicating parameter is 50%. The amount of decrease (degree of decrease) in the torque TO1 being outputted from the power source in the case shown in Part (B-a) of FIG. 1 is smaller than in the case shown in Part (B-b) of FIG. 1 (dashed line in Part (B-a) of FIG. 1).

As a result, the impact on the straddled vehicle 1 that is caused by the change in the drive torque PO1 of the drive wheel 5 is greater in the case shown in Part (B-a) of FIG. 1 than in the case shown in Part (B-b) of FIG. 1.

The change in torque TO3 from the power source 11 is also indicated by a solid line in Part (B-c) of FIG. 1.

Part (B-c) of FIG. 1 shows the case where the value of the running condition-indicating parameter is 100%, which is larger than in the case shown in Part (B-b) of FIG. 1 where the value of the running condition-indicating parameter is 50%. The amount of decrease in the torque TO3 being outputted from the power source in the case shown in Part (B-c) of FIG. 1 is larger than in the case shown in Part (B-b) of FIG. 1 (dashed line in Part (B-c) of FIG. 1).

As a result, the impact on the straddled vehicle 1 that is caused by the change in the drive torque PO3 of the drive wheel 5 is smaller in the case shown in Part (B-c) of FIG. 1 than in the case shown in Part (B-b) of FIG. 1.

As described above, in the straddled vehicle 1, the torque from the power source 11 is changed based on at least one parameter related to the degree of a possible vehicle behavior change. This configuration makes it possible to adjust a shock to a smaller magnitude in a situation where the degree of a vehicle behavior change being feasible due to an increase or a decrease in the torque from the power source 11 is large, that is, for example, in a situation where the turning speed is high. This configuration also makes it possible to adjust a shock to a larger magnitude in a situation where the turning speed is low. The straddled vehicle 1 includes the power transmission members D 1 and D2 having backlash therebetween, and is capable of adjusting a shock on the straddled vehicle 1 resulting from the backlash between the power transmission members D 1 and D2 to a magnitude suitable for a running condition of the straddled vehicle.

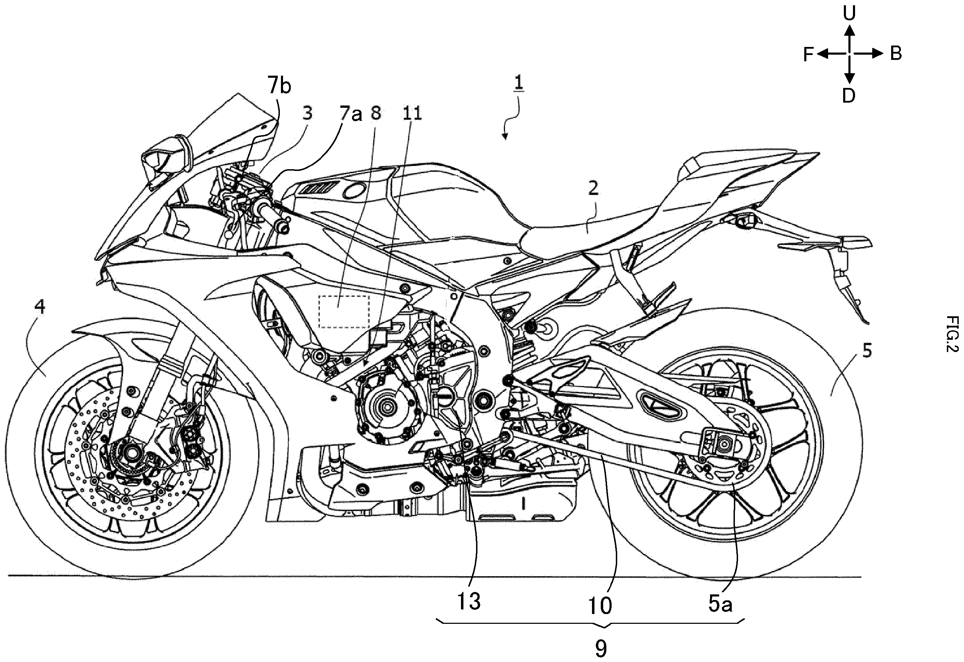

FIG. 2 is an external view of the straddled vehicle 1 illustrated in FIG. 1.

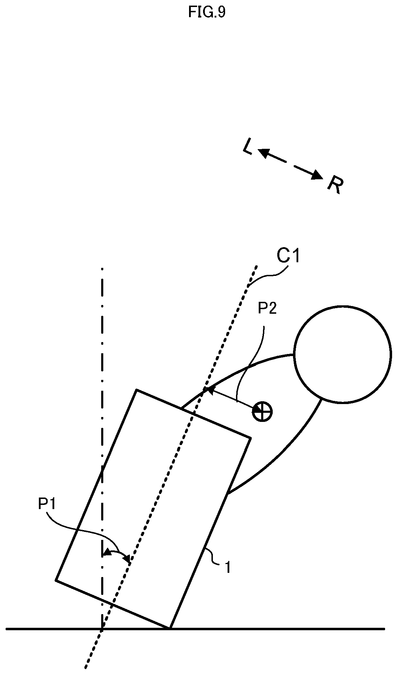

An arrow F in FIG. 2 indicates a frontward direction in the straddled vehicle 1. The straddled vehicle 1 runs in the frontward direction. An arrow B indicates a backward direction. The arrow F and the arrow B represent a front-back direction FB in the straddled vehicle 1. The frontward direction F, the backward direction B, and the front-back direction FB are parallel to a horizontal plane in the straddled vehicle 1 in an upright state. An arrow U indicates an upward direction. An arrow D indicates a downward direction. The arrow U and the arrow D represent an up-down direction UD in the straddled vehicle 1. The upward direction U, the downward direction D, and the up-down direction UD are parallel to a vertical direction in the straddled vehicle 1 in the upright state. A rightward direction and a leftward direction as seen by a rider riding a lean vehicle are respectively indicated by an arrow L and an arrow R shown in FIG. 9. The arrow L and the arrow R represent a left-right direction LR in the straddled vehicle 1.

Directions as used herein with respect to devices provided in the straddled vehicle 1 are described in accordance with the foregoing directions on the assumption that the devices are in place in the straddled vehicle 1.

The straddled vehicle 1 illustrated in FIG. 2 is a motorcycle. The straddled vehicle 1 is configured to turn while leaning. The straddled vehicle 1 includes the power source 11. The control device 8 controls the power of the power source 11. The straddled vehicle 1 also includes a seat 2, a handle 3, wheels 4 and 5, and the accelerator operator 7b. The accelerator operator 7b is provided on the handle 3 and is configured to be manipulated by a hand of a driver. Of the wheels 4 and 5 illustrated in FIG. 2, the wheel 5, which is a rear wheel, is the drive wheel 5. The power transmission path 9 has a stepped transmission 13. The power transmission path 9 also has a drive chain 10 and a rear wheel driving sprocket 5a.

The power outputted from the power source 11 is transmitted to the stepped transmission 13. The power transmitted to the stepped transmission 13 is transmitted to the drive wheel 5 via the drive chain 10 and the rear wheel driving sprocket 5a.

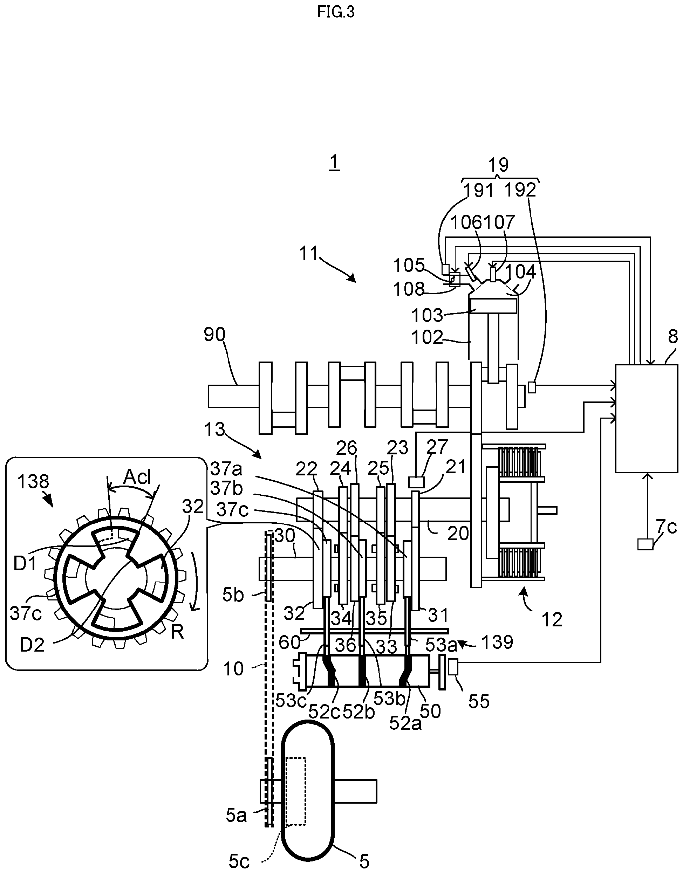

FIG. 3 is a diagram illustrating a schematic configuration involved in driving of the straddled vehicle 1 illustrated in FIG. 2.

The power source 11 of the present embodiment is an engine. FIG. 1 shows a four-cylinder engine as the power source 11. The engine serving as the power source 11 is a four-stroke engine. In FIG. 1, a configuration of only one cylinder is schematically shown, and configurations of the remaining cylinders are not shown. The power source 11 includes a power shaft 90, a cylinder(s) 102, a piston(s) 103, and a spark plug(s) 107. The power shaft 90 is a crankshaft.

The piston 103 is disposed in the cylinder 102 in a reciprocable manner. The spark plug 107 is disposed in a combustion chamber 104 formed within the cylinder 102. An intake passage leads to the combustion chamber 104, and is provided with a throttle valve 105 and a fuel injector device 106. Operation of the throttle valve 105, the fuel injector device 106, and the spark plug 107 is controlled by the control device 8.

The throttle valve 105 adjusts the volume of air being supplied to the combustion chamber 104. The fuel injector device 106 supplies a fuel to the combustion chamber 104. A gas mixture containing the air and the fuel supplied to the combustion chamber 104 is ignited through the spark plug 107, and the resulting combustion causes the piston 103 to reciprocate. The reciprocating motion of the piston 103 is converted to rotation of the power shaft 90. The power source 11 outputs a torque of the power shaft 90.

The straddled vehicle 1 also includes a clutch 12, the stepped transmission 13, a torque detector 19, and a gear stage detector 55. The clutch 12 is provided between the power source 11 and the stepped transmission 13 in the torque transmission path. The clutch 12 connects or disconnects the power being transmitted between the power source and the stepped transmission 13. The clutch 12 connects or disconnects the power in accordance with the driver's manipulation.

The torque detector 19 detects a torque-related quantity, which is related to the output torque from the power source 11 and represents the output torque. In the present embodiment, the torque detector 19 includes a throttle opening detector 191 and a power shaft speed detector 192. The torque-related quantity is a combination of the degree of opening of the throttle valve 105 detected by the throttle opening detector 191 and the rotation speed of the power shaft 90 detected by the power shaft speed detector 192. The acquisition of the torque-related quantity may involve torque calculation in the control device 8. In the present embodiment, the output torque from the power source 11 is acquired as the torque-related quantity.

In the straddled vehicle 1, the power generated by the power source 11 is normally transmitted in the following order: the power shaft 90, the clutch 12, an input shaft 20 of the stepped transmission 13, a drive gear (21 to 26), a driven gear (31 to 36), a dog ring (37a to 37c), and an output shaft 30, the drive chain 10, and the drive wheel 5. Hereinafter, a position of each component may be described as being upstream or downstream based on the direction of this power transmission flow.

The stepped transmission 13 is connected to the clutch 12. The stepped transmission 13 has a plurality of gear stages. The stepped transmission 13 includes the input shaft 20, the output shaft 30, the drive gears (21 to 26), the driven gears (31 to 36), and a gear stage setting mechanism 139.

The input shaft 20 is rotatably disposed and receives input of the power. The power outputted from the power source 11 is inputted to the input shaft 20 via the clutch 12. The stepped transmission 13 changes the rotation speed of the output shaft 30 relative to the input shaft 20 in steps.

The output shaft 30 is rotatably disposed along an axis parallel to the input shaft 20. The plurality of drive gears (21 to 26) are provided on the input shaft 20 and are configured to always rotate with the input shaft 20. The plurality of drive gears (21 to 26) is in one-to-one correspondence with the plurality of gear stages. The plurality of driven gears (31 to 36) is provided on the output shaft 30 and is configured to be rotatable relative to the output shaft 30. Each of the plurality of driven gears (31 to 36) is configured to mesh with a corresponding one of the drive gears (21 to 26).

The gear stage setting mechanism 139 is configured to mechanically and selectively enable the power transmission from the input shaft 20 to the output shaft 30 through one of the drive gears (21 to 26) and the corresponding one of the driven gears (31 to 36) for a selected one of the gear stages.

The gear stage setting mechanism 139 has a backlash-involving dog engagement mechanism 138. The backlash-involving dog engagement mechanism 138 has first dog elements D1 as the first power transmission members, and second dog elements D2 as the second power transmission members. That is, the straddled vehicle 1 includes the first dog elements D1 and the second dog elements D2.

The first dog elements D1 are an example of the first power transmission members D1. The second dog elements D2 are an example of the second power transmission members D2. The first power transmission members D1 are referred to below also as the first dog elements D1. The second power transmission members D2 are referred to below also as the second dog elements D2.

The backlash-involving dog engagement mechanism 138 mechanically and selectively enables either power transmission to any of the drive gears (21 to 26) through the input shaft 20 or power transmission from any of the driven gears (31 to 36) to the output shaft 30.

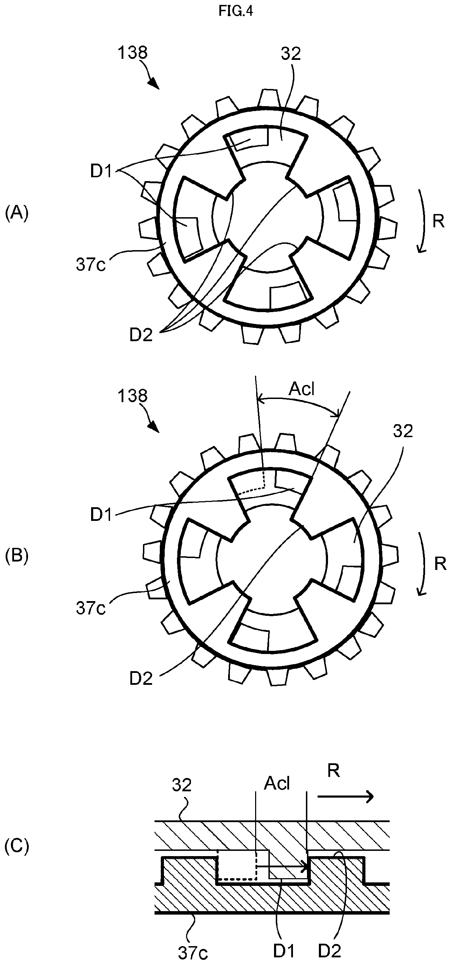

The first dog elements D1 (see FIG. 4) of the stepped transmission 13 are provided on the driven gears (31 to 36). The first dog elements D1 are a plurality of protrusions that are arranged on each of the driven gears (31 to 36) at intervals in a circumferential direction. The first dog elements D 1 protrude in an axial direction of the output shaft 30 from the driven gears (31 to 36). The backlash-involving dog engagement mechanism 138 also includes the plurality of dog rings (37a to 37c). The second dog elements D2 are provided on each of the dog rings (37a to 37c). The second dog elements D2 are a plurality of protrusions that are arranged on each of the annular dog rings (37a to 37c) at intervals in the circumferential direction.

The dog rings (37a to 37c) are provided around the output shaft 30 and are movable along the axis of the output shaft 30. The dog rings (37a to 37c) are configured to always rotate with the output shaft 30. One of the dog rings (37a to 37c) is engaged with one of the driven gears (31 to 36) by moving along the axis of the output shaft 30. Specifically, the first dog elements D1 are fitted into spaces between the second dog elements D2 arranged at intervals, and the second dog elements D2 make contact with the first dog elements D1 in the circumferential direction. Thus, dog engagement that allows for the power transmission is established. The circumferential direction includes a rotation direction R of the driven gears (31 to 36) and the dog rings (37a to 37c). The power in the rotation direction R is transmitted as a result of the dog engagement.

FIG. 4(A) is a diagram illustrating the driven gear 32 and the dog ring 37c in the non-transmission state. FIG. 4(B) is a diagram illustrating the driven gear 32 and the dog ring 37c in the transmission state. FIG. 4(C) is a circumferential partial cross-sectional view of the driven gear 32 and the dog ring 37c in the transmission state. FIGS. 4(A) to 4(C) show the backlash-involving dog engagement mechanism 138 including the first dog elements D1 and the second dog elements D2.

FIGS. 4(A) to 4(C) show the driven gear 32 and the dog ring 37c corresponding to the second speed as an example of the driven gears (31 to 36) and an example of the dog rings (37a to 37c). However, basic structures of the driven gear 32 and the dog ring 37c are the same for the other gear stages.

The first dog elements D1 are a plurality of protrusions that are arranged on the driven gear 32 at intervals in the circumferential direction. The circumferential direction extends along the rotation direction R of the driven gear 32 and the dog ring 37c. The first dog elements D1 protrude from the driven gear 32 in the axial direction of the output shaft 30. By contrast, the second dog elements D2 are a plurality of protrusions that protrude toward the center. The second dog elements D2 form a plurality of recesses arranged at intervals in the circumferential direction on the dog ring 37c. The first dog elements D1 shown are within the spaces between the second dog elements D2 arranged in the circumferential direction. The circumferential length of the spaces between the second dog elements D2 arranged in the circumferential direction is longer than the circumferential length of the first dog elements D 1. The first dog elements D 1 are within the spaces between the second dog elements D2 arranged in the circumferential direction, with a backlash fit. The first dog elements D 1 and the second dog elements D2 are configured to rotate relative to each other with the backlash therebetween.

Since the circumferential length of the spaces between the second dog elements D2 is longer than the circumferential length of the first dog elements D 1, the first dog elements D 1 are easily fitted into the spaces between the second dog elements D2 when the dog ring 37c moves in the axial direction toward the driven gear 32. Likewise, the first dog elements D 1 are easily pulled out of the second dog elements D2 when the dog ring 37c moves in the axial direction away from the driven gear 32. This allows for smooth engagement and disengagement between the first dog elements D1 and the second dog elements D2 at times of upshifting and downshifting.

The rotation direction R shown in FIGS. 4(A) to 4(C) indicates a direction in which the driven gear 32 and the dog ring 37c rotate while the straddled vehicle 1 is running. The rotation direction R therefore indicates the direction of the torque being generated in the driven gear 32 during the acceleration state. The rotation direction R is also referred to as an acceleration direction R.

During the transmission state shown in FIG. 4(B), the torque is transmitted in the acceleration direction R from the first dog elements D 1 to the second dog elements D2 through the dog engagement in which the first dog elements D1 are in contact with the second dog elements D2 in the circumferential direction. The first dog elements D1 and the second dog elements D2 are configured to enable the torque transmission by being engaged with each other.

When the power source 11 changes from the transmission state, in which the power source 11 is driven by power from the drive wheel 5, to the acceleration state, in which the power source 11 outputs a torque for acceleration, while the straddled vehicle 1 is running, for example, the driven gear 32 rotates in the acceleration direction R relative to the dog ring 37c away from a position thereof in the non-transmission state shown in FIG. 4(A). The driven gear 32 rotates relative to the dog ring 37c by the backlash angle Acl into a position shown in FIG. 4(B). The dog engagement, in which the first dog elements D1 are in contact with the second dog elements D2 in the circumferential direction, is established when the driven gear 32 is in the position shown in FIG. 4(B).

The above-described series of actions cause the switching from the non-transmission state that prevents power transmission through the first dog elements D 1 being out of contact with the second dog elements D2 in the circumferential direction (FIG. 4(A)) to the transmission state that allows power transmission in the acceleration direction R through the dog engagement in which the second dog elements D2 are in contact with the first dog elements D1 in the circumferential direction. As a result, the power for acceleration is transmitted from the input shaft 20 (see FIG. 3) to the output shaft 30 of the stepped transmission 13.

During a period until when the first and second dog elements D 1 and D2 have been switched from the non-transmission state shown in FIG. 4(A) to the transmission state shown in FIG. 4(B), the rotation speed of the driven gear 32 increases because of the power for acceleration from the power source 11. During this period, the driven gear 32 is not engaged with the dog ring 37c, which is a driving target, and is therefore free of rotation resistance from the dog ring 37c. Consequently, the amount of increase in the rotation speed of the driven gear 32 is large.

Once the driven gear 32 rotating at the increased rotation speed has been engaged with the dog ring 37c, the angular momentum of the rotation of the driven gear 32 is transmitted to the dog ring 37c in addition to the output torque from the power source 11. That is, in addition to the output torque from the power source 11, inertia force from the driven gear 32 is transmitted from the first dog elements D1 to the second dog elements D2. The angular momentum transmitted from the driven gear 32 includes the angular momentum of the rotation of members located upstream of the driven gear 32 in the power transmission path. The angular momentum of the rotation of members located upstream of the driven gear 32 in the power transmission path includes, for example, the angular momentum of the rotation of the drive gear 22, the input shaft 20, the clutch 12, and the power shaft 90 (see FIG. 3). Consequently, when the state of the first dog elements D 1 and the second dog elements D2 is switched from the non-transmission state (FIG. 4(A)) to the transmission state (FIG. 4(B)), for example, an angular momentum greater than that caused by the rotation of the driven gear 32 by itself is transmitted in a short period of time. That is, a great angular momentum is transmitted from the driven gear 32 to the dog ring 37c in a short period of time.

The angular momentum transmitted to the dog ring 37c in a short period of time is transmitted from the output shaft 30 (see FIG. 3) of the stepped transmission 13 to the drive wheel 5 (see FIG. 2). In this case, impact is exerted on the power of the drive wheel 5. The impact on the power of the drive wheel 5 results in a shock on the straddled vehicle 1.

The present embodiment reduces such a shock through the control by the control device 8.

FIG. 5 is a diagram illustrating a configuration of the control device 8 illustrated in FIG. 3.

The control device 8 includes a processor 8a that executes a program and a storage device 8b that stores the program and data. The control device 8 controls the power source 11 through the processor 8a executing the program stored in the storage device 8b.

The gear stage detector 55, the accelerator detector 7c, the throttle opening detector 191, the fuel injector device 106, a throttle motor 108, and the spark plug 107 are connected to the control device 8. The accelerator detector 7c detects the amount of manipulation of the accelerator operator 7b (see FIG. 2). The spark plug 107 is connected to the control device 8 via an ignition device, not shown. The power shaft speed detector 192 and an input shaft speed detector 27 are also connected to the control device 8. The input shaft speed detector 27 detects information on the rotation speed of the input shaft 20. Furthermore, an IMU 7d is connected to the control device 8. The gear stage detector 55, the accelerator detector 7c, and the IMU 7d are running condition sensors that detect running conditions of the straddled vehicle 1.

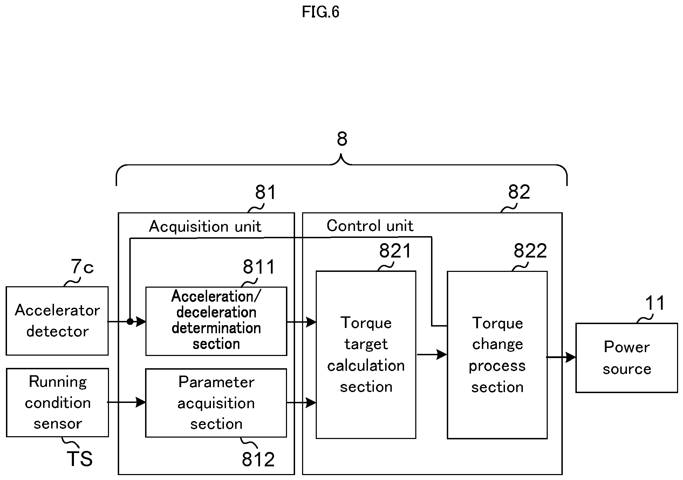

FIG. 6 is a diagram showing functional blocks of the control device 8 illustrated in FIG. 5.

The control device 8 has the acquisition unit 81 and the control unit 82. The acquisition unit 81 has an acceleration/deceleration determination section 811 and a parameter acquisition section 812. The control unit 82 has a torque target calculation section 821 and a torque change process section 822.

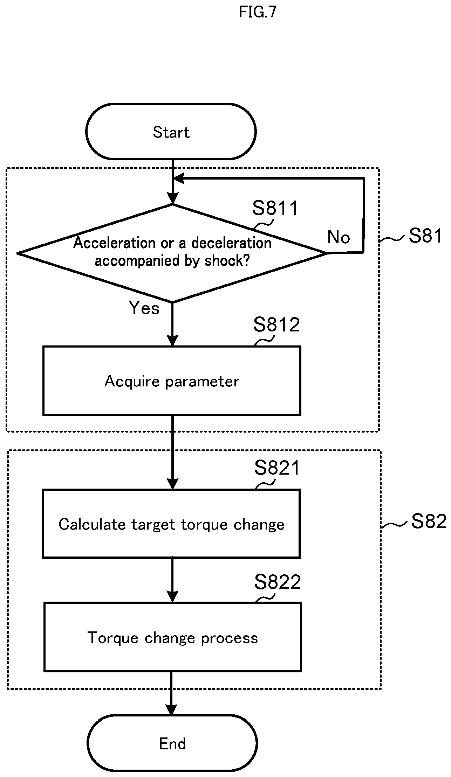

FIG. 7 is a flowchart showing an operation of the control device 8 illustrated in FIG. 5.

The following describes the operation of the control device 8 illustrated in FIG. 5 with reference to FIGS. 6 and 7.

First, the acquisition unit 81 of the control device 8 acquires a parameter indicating the degree of a vehicle behavior change being feasible due to an increase or a decrease in the torque from the power source 11 (S81). The parameter is related to, for example, the degree of a vehicle behavior change being feasible due to an increase or a decrease in the torque from the power source 11 that can occur when the first dog elements D1 and the second dog elements D2 are switched from a first non-transmission state to the transmission state.

More specifically, the acceleration/deceleration determination section 811 of the acquisition unit 81 determines whether or not an acceleration or a deceleration accompanied by a shock is expected, based on the driver's acceleration/deceleration manipulation detected by the accelerator detector 7c (S811). More specifically, the acceleration/deceleration determination section 811 determines whether or not the acceleration/deceleration manipulation detected by the accelerator detector 7c is for reversing the direction of the torque being outputted from the power source 11. Upon a determination that the acceleration/deceleration manipulation is for reversing the direction of the torque being outputted (Yes in S811), the parameter acquisition section 812 of the acquisition unit 81 acquires a running condition-indicating parameter based on detection results of any of the running condition sensors TS (S812). In the present embodiment, a parameter indicating the physical quantity related to the turning state of the straddled vehicle 1 is acquired as the running condition-indicating parameter. The physical quantity related to the turning state is, for example, a turning speed. The turning speed is acquired based on the lean angle of the straddled vehicle 1. The acquisition unit 81 acquires the lean angle based on detection results of the IMU 7d, for example.

The acquisition unit 81 refers to, for example, a map containing turning speeds and parameter values that are associated with each other, and acquires the parameter using the turning speed acquired.

FIG. 9 is a schematic diagram for explaining a state of the straddled vehicle 1 that is turning.

FIG. 9 schematically illustrates the posture of the straddled vehicle 1 and the rider as seen in the front-back direction of the straddled vehicle 1.

The straddled vehicle 1 turns while leaning. The parameter acquisition section 812 of the acquisition unit 81 acquires a lean angle P1 of the straddled vehicle 1 using detection results of the IMU 7d. The acquisition unit 81 acquires the turning speed of the straddled vehicle 1 based on the lean angle P1. The acquisition unit 81 acquires the running condition-indicating parameter based on the turning speed.

The control unit 82 of the control device 8 changes the torque being outputted from the power source 11 based on the running condition-indicating parameter (S82). For example, the control unit 82 temporarily reduces the torque being outputted from the power source 11 in the torque change period accompanying an acceleration of the straddled vehicle 1. For a larger value of the parameter, the control unit 82 causes a larger amount of decrease in the torque being outputted from the power source 11. For a smaller value of the parameter, for example, the control unit 82 causes a smaller amount of decrease in the torque being outputted from the power source 11.

More specifically, the torque target calculation section 821 of the control unit 82 calculates a target torque change to which the torque being outputted from the power source 11 is to be changed (S821). The target torque change is a target level of the change in the torque in the case of the switching from the non-transmission state to the transmission state. The target change includes a shock reduction component that is independent of the running condition-indicating parameter and a torque design component that is dependent on the running condition-indicating parameter.

The control unit 82 of the control device 8 calculates the target change by multiplying the shock reduction component, which is a basic level of the change, by a gain (factor) corresponding to the parameter.

The gain corresponding to the parameter is, for example, a value greater than 0.

In a situation where the gain is 1, for example, the target change value is equal to the shock reduction component. In such a situation, the torque design component related to the degree of the vehicle behavior change being feasible due to an increase or a decrease in the torque is substantially 0.

In a situation where the gain is smaller than 1, the absolute value of the target change value is smaller than the absolute value of the shock reduction component. In such a situation, the absolute value of the target change value is a value obtained by subtracting the torque design component corresponding to the parameter from the shock reduction component.

In a situation where the running condition-indicating parameter is greater than 1, the absolute value of the target change value is greater than the absolute value of the shock reduction component. In such a situation, the absolute value of the target change value is a value obtained by adding the torque design component corresponding to the parameter to the shock reduction component.

As described above, in the straddled vehicle according to the present embodiment, at least one parameter indicating the degree of a vehicle behavior change being feasible due to an increase or a decrease in the torque from the power source 11 is reflected in the target change.

The control unit 82 controls the power source 11 based on the target change in the period of the switching from the non-transmission state to the transmission state (S822). More specifically, the control unit 82 changes the torque being outputted from the power source 11 by changing the degree of opening by the throttle motor 108 and the timing of the ignition with the spark plug 107.

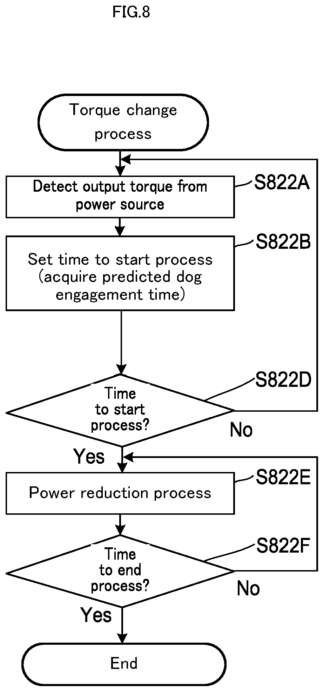

FIG. 8 is a flowchart for explaining details of the torque change process shown in FIG. 7.

In the torque change process part, the torque change process section 822 of the control unit 82 detects the output torque from the power source 11 (S822A). The torque change process section 822 detects the output torque from the power source 11 based on detection results of the torque detector 19.

Subsequently, the torque change process section 822 sets a time to start the process (S822B). In step S822B, the torque change process section 822 acquires a time of dog engagement. The torque change process section 822 acquires a predicted dog engagement time. The predicted dog engagement time represents a time remaining until the second dog elements D2 have come in dog engagement with the first dog elements D 1. Note that the time to start the process is not the same as the time of dog engagement. The time to start the process is determined based on the predicted dog engagement time.

The torque change process section 822 also obtains a predicted dog engagement speed in step S822B. The predicted dog engagement speed is a relative speed difference between the second dog elements D2 and the first dog elements D1 at the time when the second dog elements D2 are engaged with the first dog elements D1. The predicted dog engagement speed may be expressed, for example, as a relative speed difference between the input shaft 20 and the output shaft 30. The torque change process section 822 computes the predicted dog engagement speed using the output torque that has been detected.

The torque change process section 822 also acquires a predicted rotation synchronization time in step S822B. The predicted rotation synchronization time is a period of time from when the second dog elements D2 have been engaged with the first dog elements D1 until when the rotation of the power shaft 90 has been synchronized with the rotation of the drive wheel. The predicted rotation synchronization time is expressed as time it takes for the rate of change in the rotation speed of the power shaft 90 and the rate of change in the rotation speed of the drive wheel to become equal to each other. The control device 8 computes the predicted rotation synchronization time using the predicted dog engagement speed.

The control device 8 computes the predicted dog engagement time based on the output torque from the power source 11. The predicted dog engagement time is, for example, a period of time from when the power source 11 has changed from the deceleration state to the acceleration state until when the dog engagement has been established. The control device 8 computes the predicted dog engagement time using the output torque from the power source 11 that has been detected by the torque detector 19. The predicted dog engagement time varies depending on the output torque from the power source 11. The predicted dog engagement time decreases with an increase in the output torque.

The control device 8 starts a power reduction process between a time one engine cycle before the time of the switching from the non-transmission state to the transmission state and the time of the switching. One engine combustion period is a period of time of a combustion that occurs in the engine serving as the power source 11. One engine combustion period is, for example, equivalent to one engine cycle in a case where the engine serving as the power source 11 is a single-cylinder engine. In a case where the engine has a plurality of cylinders, one combustion period is equivalent to an interval at which combustions in the plurality of cylinders sequentially occur. For example, in a case where the power source 11 is a four-cylinder engine, one combustion period is equivalent to one-fourth of an engine cycle.

Since the process is started between the time one engine combustion period before the time of the switching and the time of the switching, the amount by which the time of ignition is delayed is easily changed at least at a time of ignition of the engine prior to or subsequent to the time of the switching, among times of ignition that come one after another. It is therefore possible to easily control the output torque from the engine.

In the acquisition of the predicted rotation synchronization time in step S822B, the control device 8 acquires the predicted rotation synchronization time using the predicted dog engagement speed and the gear stage.

The predicted rotation synchronization time is used for determining a time to end the power reduction process.

The control device 8 then determines whether or not the time to start the power reduction process has come (S822D).

The control device 8 determines that the time to start the power reduction process has come if the current predicted dog engagement time is shorter than a response time of the power source 11.

The response time of the power source 11 is a period of time it takes for the output torque from the power source to start decreasing after the control device 8 has outputted a torque reduction instruction value to the power source upon starting the power reduction process. In a situation where the torque is reduced by delaying the time of ignition, for example, the torque reduction is not performed until the time of ignition has come in the combustion cycle. The response time of the power source 11 is equivalent to a period of time from when the control device 8 has outputted the instruction value until when the time of ignition has come. The period of time from when the control device 8 has outputted the instruction value until when the time of ignition has come varies depending on the time when the control device 8 outputs the instruction value. That is, the period of time until when the time of ignition has come varies depending on the lapse of time. The control device 8 according to the present embodiment constantly calculates, as the response time, the period of time until when the time of ignition has come.

Upon a determination that the time to start the power reduction process has come in step S822D (Yes in S822D), the control device 8 starts the power reduction process (S822E). Thus, the reduction of the output torque from the power source 11 is timed with the establishment of the dog engagement. Through the above-described process, the torque being outputted from the power source 11 decreases when the state of the backlash-involving dog engagement mechanism 138 (FIGS. 4(A) and 4(B)) is switched from the non-transmission state (see FIG. 4(A)) to the transmission state (FIG. 4(B)).

The control device 8 then determines whether or not the time to end the power reduction process has come (S822F). The control device 8 continues the power reduction process (S822E) until the time to end the power reduction process has come (No in S822F).

In the power reduction process (S822E), the control device 8 outputs, to the power source, a torque command value according to the target change calculated in S821 in FIG. 7. The power source 11 outputs a power according to the torque command value. In the power reduction process (S822E), the control device 8 can change the power from the power source 11 over time in accordance with a preset torque correction pattern.

Upon a determination that the time to end the power reduction process has come (Yes in S822F), the control device 8 ends the power reduction process (S822E).

The control device 8 ends the power reduction process based on the predicted rotation synchronization time acquired in step S822B. Specifically, in step S822F, the control device 8 determines that the time to end the power reduction process has come if the predicted rotation synchronization time is shorter than the response time of the power source 11. Thus, the end of the reduction of the output torque from the power source 11 is timed with the start of the rotation synchronization.

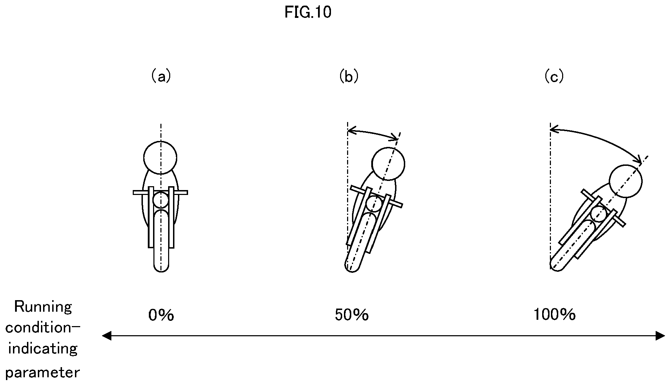

FIG. 10 is a schematic diagram illustrating a plurality of states that are different in the degree of a possible vehicle behavior change due to an increase or a decrease in the torque from the power source. Parts (a) to (c) of FIG. 10 respectively show the states in which the straddled vehicle 1 has different turning speeds.

The straddled vehicle 1 in a case shown in Part (a) of FIG. 10 is in the upright state. The turning speed of the straddled vehicle 1 is substantially 0. In this case, the degree of the possible change in the turning state due to an increase or a decrease in the torque from the power source 11 is small. The running condition-indicating parameter in the case shown in Part (a) of FIG. 10 is set to 0%.

The straddled vehicle 1 in a case shown in Part (c) of FIG. 10 is turning while in a maximum leaning state. The straddled vehicle 1 is running at a maximum turning speed. In this case, the degree of the change in the turning state being feasible due to an increase or a decrease in the torque from the power source 11 is the largest. The running condition-indicating parameter in the case shown in Part (c) of FIG. 10 is set to 100%.

The straddled vehicle 1 in a case shown in Part (b) of FIG. 10 is a medium state between the state shown in Part (a) and the state shown in Part (c). The running condition-indicating parameter in the case shown in Part (b) of FIG. 10 is set to 50%.

Although FIG. 10 shows the three representative states, the running condition-indicating parameter is set to continuous values from 0% to 100% corresponding to respective turning speeds.

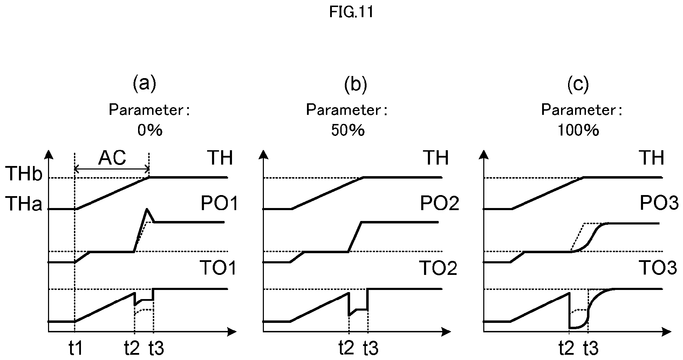

FIG. 11 shows time charts showing torque change.

Parts (a) to (c) of FIG. 11 are time charts showing changes in the torque outputted from the power source 11. Parts (a) to (c) of FIG. 11 correspond to the respective states shown in Parts (a) to (c) of FIG. 10. That is, Parts (a) to (c) of FIG. 11 respectively correspond to 0%, 50%, and 100% in terms of the running condition-indicating parameter.

Each of Parts (a) to (c) of FIG. 11 shows the throttle opening TH, the drive torque PO of the drive wheel 5, and the torque TO outputted from the power source 11.

Parts (a) to (c) of FIG. 11 all show examples of change with an acceleration. The throttle opening TH is the same for all of Parts (a) to (c) of FIG. 11, and increases from THa to THb based on the driver's manipulation in the acceleration period AC. This increase switches the state of the power source 11 from the deceleration state to the acceleration state. The torque TO being outputted from the power source 11 increases as the throttle opening TH increases.

When the state of the power source 11 is switched from the deceleration state to the acceleration state, each of the first dog elements D 1 that is located between adjacent two of the second dog elements D2 as shown in Part (C) of FIG. 4 comes out of contact with one of the two second dog elements D2 (non-transmission state), moves over a distance corresponding to the backlash while accelerating, and then comes in contact with the other one, which is the opposite one, of the two second dog elements D2 (transmission state resulting from dog engagement). That is, the angular momentum gained by the first dog elements D1 in the non-transmission state increases due to the acceleration while the state of the dog elements changes from the transmission state, in which the power is transmitted, to the non-transmission state, in which the power is not transmitted, and then changes back to the transmission state. As a result of the first and second dog elements D1 and D2 recovering the contact therebetween, which allows the switching from the non-transmission state to the transmission state, the increased angular momentum is transmitted to the second dog elements D2.

The amount of change in the drive torque PO of the drive wheel 5 upon the recovered contact increases as a result of the first dog elements D 1 moving over the distance corresponding to the backlash.

The operation of the control device 8 reduces a shock on the straddled vehicle 1 due to the switching between the deceleration state and the acceleration state described above.

Specifically, when the state of the dog elements is switched from the non-transmission state to the transmission state for transmitting the power in the acceleration direction, the control unit 82 of the control device 8 performs the power reduction process for reducing the torque being transmitted between the first dog elements D1 and the second dog elements D2. When the state of the dog elements is switched from the non-transmission state to the transmission state for transmitting the power in a deceleration direction, the control unit 82 of the control device 8 performs the power reduction process for increasing the torque being transmitted.

The control device 8 controls the time to start the process to cause the process to be started at the same time as or before the time (t2) of the switching from the non-transmission state to the transmission state, and controls the time to end the process to cause the process to be ended after the time (t2) of the switching from the non-transmission state to the transmission state.

As a result, a shock due to the first dog elements D1 and the second dog elements D2 being switched from the non-transmission state to the transmission state is reduced. In each of Parts (a) to (c) of FIG. 11, the torque TO being outputted from the power source 11 is kept reduced during the period from the time t2 to the time t3.

In Part (a) of FIG. 11, the amount of decrease in the torque TO1 from the power source 11 is indicated by a solid line.

Part (a) of FIG. 11 shows a case where the value of the running condition-indicating parameter is 0%, which is smaller than in a case shown in Part (b) of FIG. 11 where the value of the running condition-indicating parameter is 50%. In this case, the shock reduction component (value of the torque TO1 indicated by a dashed line in Part (a)) is multiplied by a gain of smaller than 1. Accordingly, the amount of decrease in the torque TO1 being outputted from the power source is smaller than in the case shown in Part (b) of FIG. 11.

As a result, the drive torque PO1 of the drive wheel 5 receives greater impact in the case shown in Part (a) of FIG. 11 than in the case shown in Part (b) of FIG. 11.

However, the drive torque PO1 of the drive wheel 5 increases in a shorter period of time in the case shown in Part (a) of FIG. 11 than in the case shown in Part (b) of FIG. 11. That is, the responsiveness of the drive torque PO1 to accelerator manipulation is higher.

In Part (c) of FIG. 11, the amount of decrease in the torque TO3 from the power source 11 is also indicated by a solid line.

Part (c) of FIG. 11 shows a case where the value of the running condition-indicating parameter is 100%, which is larger than in the case shown in Part (b) of FIG. 11 where the value of the running condition-indicating parameter is 50%. In this case, the shock reduction component (value of the torque TO3 indicated by a dashed line in Part (c)) is multiplied by a gain of greater than 1. Accordingly, the amount of decrease in the torque TO3 being outputted from the power source is larger than in the case shown in Part (b) of FIG. 11.

As a result, the change in the drive torque PO3 of the drive wheel 5 is more gradual in the case shown in Part (c) of FIG. 11. The drive torque PO3 receives smaller impact than in the case shown in Part (b) of FIG. 11.

In the foregoing example, the control unit 82 has been described as being configured to temporarily reduce the torque being outputted from the power source 11 in step S82, for example, in the torque change period accompanying an acceleration of the straddled vehicle 1, for example. The amount of decrease varies based on the value of the parameter.

In the foregoing example, however, the control unit 82 temporarily increases the torque being outputted from the power source 11 in the torque change period accompanying a deceleration of the straddled vehicle 1, for example. In this case, the amount varies based on the value of the parameter. More specifically, for a larger value of the parameter, for example, the control unit 82 causes a larger amount of increase in the torque being outputted from the power source 11. For a smaller value of the parameter, for example, the control unit 82 causes a smaller amount of increase in the torque being outputted from the power source 11.

As described above, in the straddled vehicle 1, the torque from the power source 11 is changed based on at least one parameter indicating a running condition of the straddled vehicle 1 being likely to generate with an acceleration or a deceleration. This configuration makes it possible to adjust a shock to a smaller magnitude in a situation where the degree of a vehicle behavior change being feasible due to an increase or a decrease in the torque from the power source 11 is large, that is, for example, in a situation where the turning speed is high. This configuration also makes it possible to adjust a shock to a larger magnitude in a situation where the turning speed is low. The straddled vehicle 1 includes the power transmission members D1 and D2 having backlash therebetween, and is capable of adjusting a shock on the straddled vehicle 1 resulting from the backlash between the power transmission members D1 and D2 to a magnitude suitable for a running condition of the straddled vehicle.

### [Modification Examples of Turning Speed Acquisition Method]

For acquiring the turning speed of the straddled vehicle 1, a method that does not involve the use of the lean angle P1 of the straddled vehicle 1 may be adopted. For example, the control device 8 may acquire the turning speed based on a distance P2 from a central plane C 1 in the straddled vehicle 1 in the left-right direction LR to a position of the center of gravity of the rider shown in FIG. 9. In this case, the position of the center of gravity of the rider is estimated, for example, based on detection results of a plurality of pressure sensors disposed in the seat.

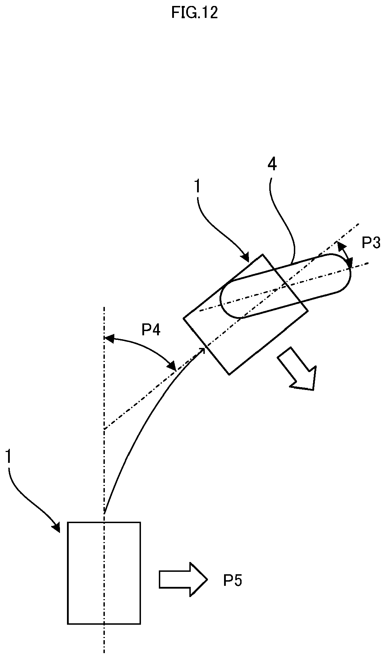

FIG. 12 is a plan view of the straddled vehicle 1 for schematically illustrating the turning state thereof.

The control device 8 may, for example, acquire the turning speed based on a steering angle P3 for the front wheel 4 of the straddled vehicle 1. The steering angle P3 is detected, for example, by a sensor provided on the handle 3.

For another example, the control device 8 may adopt a method involving directly acquiring the turning speed from the amount of change in a yaw angle P4 of the straddled vehicle 1 per unit time. For another example, the control device 8 may adopt a method involving acquiring the turning speed based on an acceleration rate P5 of the straddled vehicle 1 in the left-right direction. The yaw angle or the acceleration rate in the left-right direction is detected, for example, by the IMU 7d (see FIG. 5) mounted in the straddled vehicle 1.

### [Second Embodiment]

The following describes a second embodiment of the present teaching.

According to the second embodiment of the present teaching, a parameter is acquired based on the distance between the straddled vehicle 1 and a vehicle ahead. The second embodiment is otherwise the same as the first embodiment. A configuration of the second embodiment is therefore described using the drawings illustrating the first embodiment and the same reference signs as the first embodiment.

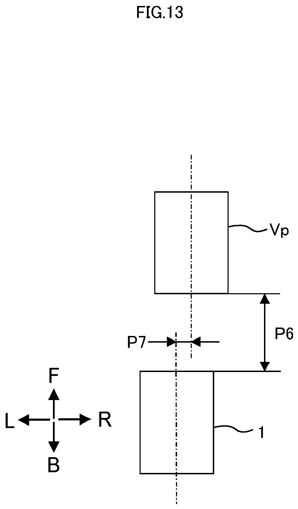

FIG. 13 is a plan view for schematically illustrating a positional relationship between the straddled vehicle 1 according to the second embodiment and an in-front vehicle Vp.

The in-front vehicle Vp is running in the frontward direction F ahead of the straddled vehicle 1 in the front-back direction FB of the straddled vehicle 1.

The distance between the straddled vehicle 1 and the in-front vehicle Vp includes an inter-vehicle distance, that is, a distance P6 in the front-back direction FB and a distance P7 between central lines of the vehicles in the left-right direction LR. The degree of a vehicle behavior change being feasible due to an increase or a decrease in the torque from the power source 11 that is likely to generate while the straddled vehicle 1 is running increases with a decrease in the distance P6 in the front-back direction FB. Furthermore, even on the condition that the distance P6 in the front-back direction FB is the same, the degree of the vehicle behavior change being feasible due to an increase or a decrease in the torque from the power source 11 increases with a decrease in the distance P7 in the left-right LR.

The control device 8 acquires each of the distances P6 and P7 by, for example, any one of the following methods or a combination of some of the following methods: measurement using a laser radar, estimation using an image captured by a camera, measurement using millimeter waves, and information acquisition through vehicle-to-vehicle communication with the in-front vehicle Vp.

Alternatively, another configuration may be adopted in which the distance P6 in the front-back direction FB is expressed in the form of a traveling time of the straddled vehicle 1. In this case, the distance P6 is, for example, expressed as an inter-vehicle time obtained by dividing the distance P6 by the speed of the straddled vehicle 1.

Alternatively, another configuration may be adopted in which the distance P6 is expressed using a relative speed of the straddled vehicle 1 with respect to the speed of the in-front vehicle Vp. In this case, the distance P6 is expressed using a value obtained by subtracting the speed of the in-front vehicle Vp from the speed of the straddled vehicle 1. Alternatively, another configuration may be adopted in which the distance P6 is expressed in the form of time it takes for the straddled vehicle 1 to reach the in-front vehicle Vp. In this case, the distance P6 is expressed as a reach time obtained by dividing the distance P6 by the relative speed of the straddled vehicle 1 with respect to the speed of the in-front vehicle Vp.

The control device 8 changes the torque from the power source 11 based on a parameter corresponding to the distances P6 and P7 between the straddled vehicle 1 and the in-front vehicle Vp. More specifically, the control device 8 acquires a running condition-indicating parameter based on either the distance P6 in the front-back direction FB or the distance P7 in the left-right direction LR, or based on a combination of the distances P6 and P7. The control device 8 changes the torque from the power source 11 based on the value of the parameter.

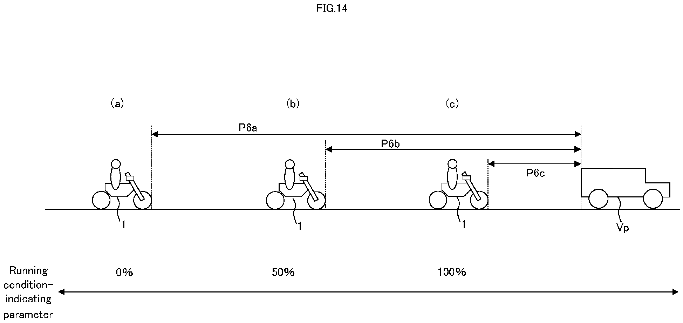

FIG. 14 is a schematic diagram illustrating a plurality of states that is different in the distance to the in-front vehicle Vp. Parts (a) to (c) of FIG. 14 respectively show the states in which the straddled vehicle 1 has different distances P6a to P6c to the in-front vehicle Vp.

A distance P6c between the straddled vehicle 1 and the in-front vehicle Vp in a case shown in Part (c) of FIG. 14 is shorter than a distance P6a between the straddled vehicle 1 and the in-front vehicle Vp in a case shown in Part (a). An acceleration and a deceleration of the straddled vehicle 1 in response to an acceleration and a deceleration of the in-front vehicle Vp are likely to generate more frequently in the case shown in Part (c) than in the case shown in Part (a). Furthermore, the degree of the acceleration and the deceleration of the straddled vehicle 1 is likely to be greater than in the case shown in Part (a). Accordingly, the degree of the possible vehicle behavior change is greater. In this case, the parameter indicating the running condition of the straddled vehicle 1 that is likely to generate an acceleration or a deceleration of the straddled vehicle 1 is set to 100%.

By contrast, the distance P6a between the straddled vehicle 1 and the in-front vehicle Vp in the case shown in Part (a) of FIG. 14 is longer. The vehicle behavior change being feasible due to an acceleration or a deceleration of the in-front vehicle Vp is negligibly small. In this case, the parameter indicating the running condition of the straddled vehicle 1 is set to 0%.

A distance P6b between the straddled vehicle 1 and the in-front vehicle Vp in a case shown in Part (b) of FIG. 14 is a medium distance that is shorter than the distance P6a in the case shown in Part (a) of FIG. 14 and longer than the distance P6c in the case shown in Part (c) of FIG. 14. The running condition-indicating parameter in the case shown in Part (b) is set to 50%.

### [Third Embodiment]

The following describes a third embodiment of the present teaching.

In the third embodiment of the present teaching, a parameter indicating a yet different factor is acquired. A configuration of the third embodiment is described using the drawings illustrating the first embodiment and the same reference signs as the first embodiment.

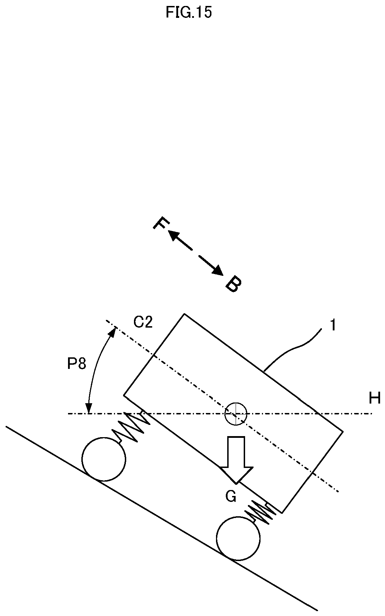

FIG. 15 is a side view of the straddled vehicle 1 according to the third embodiment for schematically illustrating a pitch angle thereof. A pitch angle P8 between an axis C2 of the straddled vehicle 1 in the front-back direction FB and a horizontal plane H is not 0. In this case, the degree of a vehicle behavior change being feasible due to an increase or a decrease in the torque from the power source 11 is large.

The degree of the vehicle behavior change being feasible increases with an increase in the pitch angle P8.

The control device 8 acquires the pitch angle P8 of the straddled vehicle 1 using detection results of the IMU 7d (see FIG. 5).

Alternatively, the control device 8 may estimate the direction of gravitational acceleration by using, for example, a shock absorber stroke sensor provided in the straddled vehicle 1. The pitch angle P8 is acquired based on the direction of the gravitational acceleration.

Alternatively, the control device 8 may acquire a difference between a target acceleration rate calculated based on a command value for the output torque from the power source 11 and an actual acceleration rate of the straddled vehicle 1 detected by a vehicle speed sensor. The pitch angle P8 of the straddled vehicle 1 is acquired based on the thus acquired difference.

Alternatively, the control device 8 may acquire the pitch angle P8 of the straddled vehicle 1 through road-to-vehicle communication with a device installed on or near the road.

The control device 8 changes the torque from the power source 11 based on the parameter corresponding to the pitch angle P8 of the straddled vehicle 1.

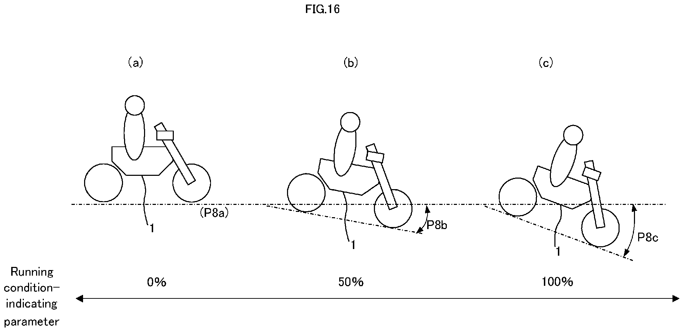

FIG. 16 is a schematic diagram illustrating a plurality of states that are different in the pitch angle. Parts (a) to (c) of FIG. 16 respectively show the states in which the straddled vehicle 1 has different pitch angles.

A pitch angle P8a of the straddled vehicle 1 in a case shown in Part (a) of FIG. 16 is substantially 0. A pitch angle P8c of the straddled vehicle 1 in a case shown in Part (c) of FIG. 16 is greater than the pitch angle P8a (= 0) of the straddled vehicle 1 in the case shown in Part (a). An acceleration and a deceleration of the straddled vehicle 1 in response to an acceleration and a deceleration of the in-front vehicle Vp are likely to generate more frequently in the case shown in Part (c) than in the case shown in Part (a). Furthermore, the degree of the acceleration and the deceleration of the straddled vehicle 1 is likely to be greater than in the case shown in Part (a). Accordingly, the degree of the vehicle behavior change being feasible due to an increase or a decrease in the torque from the power source 11 is greater. In this case, the parameter indicating the running condition of the straddled vehicle 1 is set to 100%.

By contrast, the pitch angle P8a of the straddled vehicle 1 in the case shown in Part (a) of FIG. 16 is substantially 0, and thus the parameter indicating the running condition of the straddled vehicle 1 is set to 0%.

A pitch angle P8b of the straddled vehicle 1 in a case shown in Part (b) of FIG. 16 is a medium pitch angle that is smaller than the pitch angle in the case shown in Part (a) of FIG. 16 and greater than the pitch angle in the case shown in Part (c) of FIG. 16. In the case shown in Part (b), the parameter related to the degree of the possible vehicle behavior change due to an increase or a decrease in the torque from the power source 11 is set to 50%.

### [Fourth Embodiment]

The following describes a fourth embodiment of the present teaching.

In the fourth embodiment of the present teaching, a parameter indicating a yet different factor is acquired. A configuration of the fourth embodiment is described using the drawings illustrating the first embodiment and the same reference signs as the first embodiment.

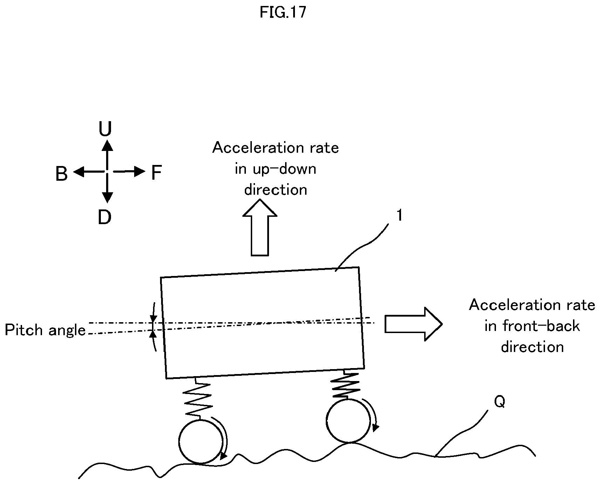

FIG. 17 is a side view of the straddled vehicle 1 according to the fourth embodiment for schematically illustrating a coefficient of friction thereof.

FIG. 17 shows the straddled vehicle 1 running on an uneven road surface Q.

The road surface Q on which the straddled vehicle 1 is running has a coefficient of friction. The road surface roughness affects the coefficient of friction.

The degree of a vehicle behavior change being feasible due to an increase or a decrease in the torque from the power source 11 increases with a decrease in the coefficient of friction.

The control device 8 acquires the road surface roughness of the road surface Q using detection results of the IMU 7d (see FIG. 5). More specifically, the control device 8 acquires the road surface roughness based on an acceleration rate in the up-down direction UD, an acceleration rate in the front-back direction FB, and a pitch angle detected by the IMU 7d (see FIG. 5).

Another configuration may be adopted in which the coefficient of friction against the road surface Q is expressed as a difference between a friction force limit value and an estimated tire force value. In this case, the coefficient of friction against the road surface Q is expressed, for example, as a difference between the estimated tire force value and a force obtained by multiplying the coefficient of friction by a vehicle weight including a weight of a rider thereon and a gravitational acceleration. The estimated tire force value can be acquired using the IMU, driving force, or braking force. The weight of the rider can be acquired using a pressure sensor provided in the seat. Alternatively, the weight of the rider may be acquired by a user registering the information with an interface tool.

The control device 8 may alternatively acquire the road surface roughness of the road surface Q using, for example, a shock absorber stroke sensor provided in the straddled vehicle 1. The control device 8 acquires the coefficient of friction against the road surface Q based on the road surface roughness.

The control device 8 may alternatively acquire a wheelspin rate of the drive wheel of the straddled vehicle 1 running on the road surface Q using, for example, detection results of the IMU 7d (see FIG. 5) and detection results of a rotation speed sensor for the drive wheel. The control device 8 acquires the coefficient of friction against the road surface Q based on the wheelspin rate.

Alternatively, the control device 8 may acquire the coefficient of friction against the road surface Q through road-to-vehicle communication with a device installed on or near the road.

The control device 8 changes the torque from the power source 11 based on the parameter corresponding to the coefficient of friction of the straddled vehicle 1.

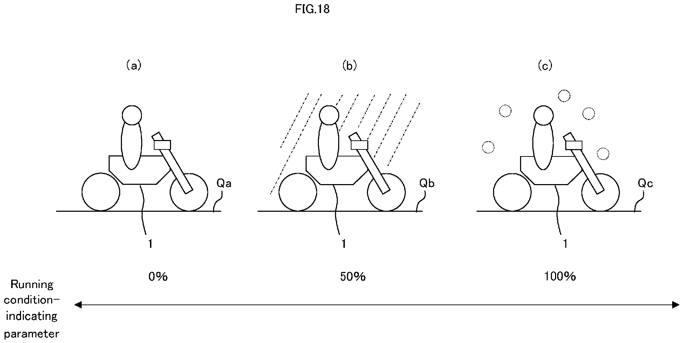

FIG. 18 is a schematic diagram illustrating the straddled vehicle 1 running on road surfaces that are different in the coefficient of friction. Parts (a) to (c) of FIG. 18 respectively show states in which the straddled vehicle 1 has different coefficients of friction due to weather.

Part (a) of FIG. 18 shows a road surface Qa in a case where it is sunny. A coefficient of friction against the road surface Qa in the case shown in Part (a) is the highest of all cases shown in Parts (a) to (c) of FIG. 18.

Part (c) of FIG. 18 shows a road surface Qc in a case where it is snowy. A coefficient of friction against the road surface Qc in the case shown in part (c) of FIG. 18 is lower than the coefficient of friction against the road surface Qa in the case shown in Part (a). The degree of the vehicle behavior change being feasible due to an increase or a decrease in the torque from the power source upon a manipulation is greater in the case shown in Part (c) than in the case shown in Part (a). In this case, the parameter indicating the running condition of the straddled vehicle 1 is set to 100%.

By contrast, the coefficient of friction against the road surface Qa in the case shown in Part (a) of FIG. 18 is the highest, and thus the parameter indicating the running condition of the straddled vehicle 1 is set to 0%.

Part (b) of FIG. 18 shows a road surface Qb in a case where it is rainy. A coefficient of friction against the road surface Qb in the case shown in Part (b) of FIG. 18 is a medium coefficient of friction that is lower than the coefficient of friction in the case shown in Part (a) of FIG. 18 and higher than the coefficient of friction in the case shown in Part (c) of FIG. 18. In the case shown in Part (b), the parameter related to the degree of the possible vehicle behavior change due to an increase or a decrease in the torque from the power source 11 is set to 50%.

### Reference Signs List

- 1: straddled vehicle
- 5: drive wheel (driven member)
- 8: control device
- 81: acquisition unit
- 82: control unit
- 9: power transmission path
- 11: power source
- D1: first dog element (first power transmission member)
- D2: second dog element (second power transmission member)

## Claims

1. A straddled vehicle (1) comprising:
a power source (11) configured to output a torque;
a driven member (5) configured to be driven by the power source (11) to cause the straddled vehicle (1) to run;
a power transmission path (9) configured to transmit the torque outputted from the power source (11) to the driven member (5), the power transmission path (9) including a first power transmission member (D1) and a second power transmission member (D2) having backlash therebetween and being movable relative to each other, the first power transmission member (D 1) and the second power transmission member (D2) being configured to transmit power when in a transmission state in which the first and second power transmission members (D1, D2) are in engagement with each other, and being configured to not transmit power when in a non-transmission state in which the first and second power transmission members (D1, D2) are not in engagement with each other; and
a control device (8) having an acquisition unit (81) and a control unit (82),
the acquisition unit (81) being configured to acquire at least one parameter indicating a degree of a vehicle behavior change of the straddled vehicle (1), the vehicle behavior change being feasible due to an increase or a decrease in the torque from the power source (11),
the control unit (82) being configured, in a torque change period, to perform a change process for change of the torque being outputted from the power source (11), the change process being carried out based on the at least one parameter, the torque change period including at least a part of a non-transmission period that is from a first timing until a second timing, the first timing being a switching of the first and second power transmission members (D1, D2) from the transmission state to the non-transmission state along with an acceleration or a deceleration of the straddled vehicle (1), the second timing being a switching of the first and second power transmission members (D1, D2) from the non-transmission state to the transmission state, **characterized in that**
the acquisition unit (81) is configured to acquire, as the parameter indicating the degree of a vehicle behavior change of the straddled vehicle (1), the vehicle behavior change being feasible due to an increase or a decrease in the torque from the power source (11), a parameter related to at least one of the following:
(a) a physical quantity related to a turning state of the straddled vehicle (1);
(b) a pitch angle between an axis of the straddled vehicle (1) in a front-back direction of the straddled vehicle (1) and a horizontal plane; or
(c) a coefficient of friction against a road surface (Q) on which the straddled vehicle (1) is running.

2. The straddled vehicle (1) according to claim 1, wherein
the acquisition unit (81) is configured to acquire, as the at least one parameter indicating the degree of a vehicle behavior change being feasible due to an increase or a decrease in the torque from the power source (11), a parameter indicating a physical quantity related to a turning state of the straddled vehicle (1), and
the control unit (82) is configured to change the torque from the power source (11) based on the parameter indicating the physical quantity related to the turning state of the straddled vehicle (1) that has been acquired by the acquisition unit (81).

3. The straddled vehicle (1) according to any one of claims 1 or 2, wherein
the acquisition unit (81) is configured to further acquire, as a parameter indicating a running condition of the straddled vehicle (1) being possible to generate an acceleration or a deceleration of the straddled vehicle (1), a parameter indicating a distance between the straddled vehicle (1) and an in-front vehicle running ahead of the straddled vehicle (1) in a front-back direction of the straddled vehicle (1), and
the control unit (82) is configured to change the torque from the power source (11) based on the parameter indicating the distance between the straddled vehicle (1) and the in-front vehicle that has been acquired by the acquisition unit (81).

4. The straddled vehicle (1) according to any one of claims 1 to 3, wherein
the acquisition unit (81) is configured to acquire, as the at least one parameter indicating the degree of a vehicle behavior change being feasible due to an increase or a decrease in the torque from the power source (11), a parameter indicating a pitch angle between an axis of the straddled vehicle (1) in a front-back direction of the straddled vehicle (1) and a horizontal plane, and
the control unit (82) is configured to change the torque from the power source (11) based on the parameter indicating the pitch angle that has been acquired by the acquisition unit (81).

5. The straddled vehicle (1) according to any one of claims 1 to 4, wherein
the acquisition unit (81) is configured to acquire, as the at least one parameter indicating the degree of a vehicle behavior change being feasible due to an increase or a decrease in the torque from the power source (11), a parameter indicating a coefficient of friction against a road surface on which the straddled vehicle (1) is running, and
the control unit (82) is configured to change the torque from the power source (11) based on the parameter indicating the coefficient of friction that has been acquired by the acquisition unit (81).

6. The straddled vehicle (1) according to any one of claims 1 to 5, wherein
the control unit (82) is configured to acquire a target change value to which the torque from the power source (11) is to be changed, and to change the torque from the power source (11) in accordance with the target change value in the torque change period, and
the target change value includes a torque design component set depending on the at least one parameter and a shock reduction component set to reduce a shock to be transmitted with the switching from the non-transmission state to the transmission state, the shock reduction component being independent of the at least one parameter,
wherein the shock reduction component is a component for reducing the output torque from the power source when the straddled vehicle accelerates and for increasing the output torque from the power source when the straddled vehicle decelerates, and wherein the torque design component is a component for increasing or reducing the output torque from the power source more than the shock reduction component when the straddled vehicle accelerates or decelerates.

7. The straddled vehicle (1) according to claim 2,
the straddled vehicle (1) being configured to turn while leaning, and lean in a leftward direction of the straddled vehicle (1) while making a left turn and lean in a rightward direction of the straddled vehicle (1) while making a right turn, wherein
the acquisition unit (81) is configured to acquire the physical quantity related to the turning state based on a lean angle of the straddled vehicle (1).

8. The straddled vehicle (1) according to any one of claims 1 to 7, wherein
the control unit (82) is configured to control a time to start the change process to cause the change process to be started at the same time as or before the second timing, and to control a time to end the change process to cause the change process to be ended after the second timing, the second timing being the switching from the non-transmission state to the transmission state.

## Patentansprüche

1. Ein Spreizsitzfahrzeug (1), das folgende Merkmale aufweist:
eine Leistungsquelle (11), die dazu konfiguriert ist, ein Drehmoment auszugeben;
ein angetriebenes Bauglied (5), das dazu konfiguriert ist, durch die Leistungsquelle (11) angetrieben zu werden, um zu bewirken, dass das Spreizsitzfahrzeug (1) fährt;
einen Leistungsübertragungsweg (9), der dazu konfiguriert ist, das Drehmoment, das von der Leistungsquelle (11) ausgegeben wird, zu dem angetriebenen Bauglied (5) zu übertragen, wobei der Leistungsübertragungsweg (9) ein erstes Leistungsübertragungsbauglied (D1) und ein zweites Leistungsübertragungsbauglied (D2) umfasst, die zwischen sich ein Spiel aufweisen und zueinander beweglich sind, wobei das erste Leistungsübertragungsbauglied (D1) und das zweite Leistungsübertragungsbauglied (D2) dazu konfiguriert sind, Leistung zu übertragen, wenn dieselben in einem Übertragungszustand sind, in dem das erste und zweite Leistungsübertragungsbauglied (D1, D2) in Eingriff miteinander sind, und dazu konfiguriert sind, keine Leistung zu übertragen, wenn dieselben in einem Nichtübertragungszustand sind, in dem das erste und zweite Leistungsübertragungsbauglied (D1, D2) nicht in Eingriff miteinander sind; und
eine Steuervorrichtung (8), die eine Erfassungseinheit (81) und eine Steuereinheit (82) aufweist,
wobei die Erfassungseinheit (81) dazu konfiguriert ist, zumindest einen Parameter zu erfassen, der einen Grad einer Änderung eines Fahrzeugverhaltens des Spreizsitzfahrzeugs (1) anzeigt, wobei die Änderung eines Fahrzeugverhaltens durch eine Erhöhung oder Verringerung bei dem Drehmoment von der Leistungsquelle (11) möglich ist,
wobei die Steuereinheit (82) dazu konfiguriert ist, in einer Drehmomentänderungsperiode einen Änderungsprozess für eine Änderung des Drehmoments durchzuführen, das von der Leistungsquelle (11) ausgegeben wird, wobei der Änderungsprozess basierend auf dem zumindest einen Parameter ausgeführt wird, wobei die Drehmomentänderungsperiode zumindest einen Teil einer Nichtübertragungsperiode umfasst, die von einer ersten Zeitsteuerung bis zu einer zweiten Zeitsteuerung reicht, wobei die erste Zeitsteuerung ein Schalten des ersten und zweiten Leistungsübertragungsbauglieds (D1, D2) von dem Übertragungszustand zu dem Nichtübertragungszustand ist, zusammen mit einer Beschleunigung oder einer Verlangsamung des Spreizsitzfahrzeugs (1), wobei die zweite Zeitsteuerung ein Schalten des ersten und zweiten Leistungsübertragungsbauglieds (D1, D2) von dem Nichtübertragungszustand zu dem Übertragungszustand ist, **dadurch gekennzeichnet, dass**
die Erfassungseinheit (81) dazu konfiguriert ist, als den Parameter, der den Grad einer Änderung eines Fahrzeugverhaltens des Spreizsitzfahrzeugs (1) anzeigt, wobei die Änderung eines Fahrzeugverhaltens durch eine Erhöhung oder Verringerung bei dem Drehmoment von der Leistungsquelle (11) möglich ist, einen Parameter zu erfassen, der sich auf zumindest eines der Folgenden bezieht:
(a) eine physikalische Größe, die sich auf einen Abbiegezustand des Spreizsitzfahrzeugs (1) bezieht;
(b) einen Steigungswinkel zwischen einer Achse des Spreizsitzfahrzeugs (1) in einer Vorwärts-Rückwärts-Richtung des Spreizsitzfahrzeugs (1) und einer horizontalen Ebene; oder
(c) einen Reibungskoeffizienten gegen eine Straßenoberfläche (Q), auf der das Spreizsitzfahrzeug (1) fährt.

2. Das Spreizsitzfahrzeug (1) gemäß Anspruch 1, bei dem
die Erfassungseinheit (81) dazu konfiguriert ist, als den zumindest einen Parameter, der den Grad einer Änderung eines Fahrzeugverhaltens anzeigt, die durch eine Erhöhung oder Verringerung bei dem Drehmoment von der Leistungsquelle (11) möglich ist, einen Parameter zu erfassen, der eine physikalische Größe anzeigt, die sich auf einen Abbiegezustands des Spreizsitzfahrzeugs (1) bezieht, und
die Steuereinheit (82) dazu konfiguriert ist, das Drehmoment von der Leistungsquelle (11) basierend auf dem Parameter zu ändern, der die physikalische Größe anzeigt, die sich auf den Abbiegezustand des Spreizsitzfahrzeugs (1) bezieht, der durch die Erfassungseinheit (81) erfasst wurde.

3. Das Spreizsitzfahrzeug (1) gemäß einem der Ansprüche 1 bis 2, bei dem
die Erfassungseinheit (81) dazu konfiguriert ist, ferner als einen Parameter, der eine Fahrbedingung des Spreizsitzfahrzeugs (1) anzeigt, die möglich ist, um eine Beschleunigung oder eine Verlangsamung des Spreizsitzfahrzeugs (1) zu erzeugen, einen Parameter zu erfassen, der einen Abstand zwischen dem Spreizsitzfahrzeug (1) und einem vorausfahrenden Fahrzeug vor dem Spreizsitzfahrzeug (1) in einer Vorwärts-Rückwärts-Richtung des Spreizsitzfahrzeugs (1) anzeigt, und
die Steuereinheit (82) dazu konfiguriert ist, das Drehmoment von der Leistungsquelle (11) basierend auf dem Parameter zu ändern, der den Abstand zwischen dem Spreizsitzfahrzeug (1) und dem vorausfahrenden Fahrzeug anzeigt, der durch die Erfassungseinheit (81) erfasst wurde.

4. Das Spreizsitzfahrzeug (1) gemäß einem der Ansprüche 1 bis 3, bei dem
die Erfassungseinheit (81) dazu konfiguriert ist, als den zumindest einen Parameter, der den Grad einer Änderung eines Fahrzeugverhaltens anzeigt, die durch eine Erhöhung oder Verringerung bei dem Drehmoment von der Leistungsquelle (11) möglich ist, einen Parameter zu erfassen, der einen Steigungswinkel zwischen einer Achse des Spreizsitzfahrzeugs (1) in einer Vorwärts-Rückwärts-Richtung des Spreizsitzfahrzeugs (1) und einer horizontalen Ebene anzeigt, und
die Steuereinheit (82) dazu konfiguriert ist, das Drehmoment von der Leistungsquelle (11) basierend auf dem Parameter zu ändern, der den Steigungswinkel anzeigt, der durch die Erfassungseinheit (81) erfasst wurde.

5. Das Spreizsitzfahrzeug (1) gemäß einem der Ansprüche 1 bis 4, bei dem
die Erfassungseinheit (81) dazu konfiguriert ist, als den zumindest einen Parameter, der den Grad einer Änderung eines Fahrzeugverhaltens anzeigt, der durch eine Erhöhung oder Verringerung bei dem Drehmoment von der Leistungsquelle (11) möglich ist, einen Parameter zu erfassen, der einen Reibungskoeffizienten gegen eine Straßenoberfläche anzeigt, auf der das Spreizsitzfahrzeug (1) fährt, und
die Steuereinheit (82) dazu konfiguriert ist, das Drehmoment von der Leistungsquelle (11) basierend auf dem Parameter zu ändern, der den Reibungskoeffizienten anzeigt, der durch die Erfassungseinheit (81) erfasst wurde.

6. Das Spreizsitzfahrzeug (1) gemäß einem der Ansprüche 1 bis 5, bei dem
die Steuereinheit (82) dazu konfiguriert ist, einen Zieländerungswert zu erfassen, zu dem das Drehmoment von der Leistungsquelle (11) zu ändern ist, und das Drehmoment von der Leistungsquelle (11) gemäß dem Zieländerungswert in der Drehmomentänderungsperiode zu ändern, und
der Zieländerungswert einen Drehmomententwurfskomponentensatz, der von dem zumindest einen Parameter abhängt, und einen Stoßreduktionskomponentensatz zum Reduzieren eines Stoßes umfasst, der mit dem Schalten von dem Nichtübertragungszustand zu dem Übertragungszustand zu übertragen ist, wobei die Stoßreduktionskomponente unabhängig ist von dem zumindest einen Parameter,
wobei die Stoßreduktionskomponente eine Komponente ist zum Reduzieren des Ausgabedrehmoments von der Leistungsquelle, wenn das Spreizsitzfahrzeug beschleunigt, und zum Erhöhen des Ausgabedrehmoments von der Leistungsquelle, wenn das Spreizsitzfahrzeug verlangsamt, und wobei die Drehmomententwurfskomponente eine Komponente ist zum stärkeren Erhöhen oder Reduzieren des Ausgabedrehmoments von der Leistungsquelle als der Stoßreduktionskomponente, wenn das Spreizsitzfahrzeug beschleunigt oder verlangsamt.

7. Das Spreizsitzfahrzeug (1) gemäß Anspruch 2,
wobei das Spreizsitzfahrzeug (1) konfiguriert ist, während des Neigens abzubiegen und sich in einer Linksrichtung des Spreizsitzfahrzeugs (1) zu neigen beim Linksabbiegen und in einer Rechtsrichtung des Spreizsitzfahrzeugs (1) zu neigen beim Rechtsabbiegen, wobei
die Erfassungseinheit (81) dazu konfiguriert ist, die physikalische Größe, die sich auf den Abbiegezustand bezieht, basierend auf einem Neigungswinkel des Spreizsitzfahrzeugs (1) zu erfassen.

8. Das Spreizsitzfahrzeug (1) gemäß einem der Ansprüche 1 bis 7, bei dem
die Steuereinheit (82) dazu konfiguriert ist, einen Zeitpunkt zum Starten des Änderungsprozesses zu steuern, um zu bewirken, dass der Änderungsprozess zu dem gleichen Zeitpunkt wie die oder vor der zweiten Zeitsteuerung gestartet wird, und einen Zeitpunkt zum Enden des Änderungsprozesses zu steuern, um zu bewirken, dass der Änderungsprozess nach der zweiten Zeitsteuerung beendet wird, wobei die zweite Zeitsteuerung das Schalten von dem Nichtübertragungszustand zu dem Übertragungszustand ist.

## Revendications

1. Véhicule à selle (1) comprenant:
une source d'alimentation d'énergie (11) configurée pour sortir un couple;
un élément entraîné (5) configuré pour être entraîné par la source d'alimentation d'énergie (11) pour faire circuler le véhicule à selle (1);
un trajet de transmission d'énergie (9) configuré pour transmettre le couple sorti par la source d'alimentation d'énergie (11) vers l'élément entraîné (5), le trajet de transmission d'énergie (9) comportant un premier élément de transmission d'énergie (D1) et un deuxième élément de transmission d'énergie (D2) présentant un jeu entre eux et pouvant se déplacer l'un par rapport à l'autre, le premier élément de transmission d'énergie (D1) et le deuxième élément de transmission d'énergie (D2) étant configurés pour transmettre de l'énergie lorsqu'ils se trouvent dans un état de transmission dans lequel les premier et deuxième éléments de transmission d'énergie (D1, D2) sont en prise l'un avec l'autre, et étant configurés pour ne pas transmettre de l'énergie lorsqu'ils se trouvent dans un état de non-transmission dans lequel les premier et deuxième éléments de transmission d'énergie (D1, D2) ne sont pas en prise l'un avec l'autre; et
un dispositif de commande (8) présentant une unité d'acquisition (81) et une unité de commande (82),
l'unité d'acquisition (81) étant configurée pour acquérir au moins un paramètre indiquant un degré de changement de comportement du véhicule à selle (1), le changement de comportement de véhicule pouvant être réalisé du fait d'une augmentation ou d'une diminution du couple provenant de la source d'alimentation d'énergie (11),
l'unité de commande (82) étant configurée pour effectuer, au cours d'une période de changement de couple, un processus de changement pour changer le couple sorti par la source d'alimentation d'énergie (11), le processus de changement étant effectué sur base de l'au moins un paramètre, le période de changement de couple comportant au moins une partie d'une période de non-transmission qui va d'un premier moment à un deuxième moment, le premier moment étant une commutation des premier et deuxième éléments de transmission d'énergie (D1, D2) de l'état de transmission à l'état de non-transmission ensemble avec une accélération ou une décélération du véhicule à selle (1), le deuxième moment étant une commutation des premier et deuxième éléments de transmission d'énergie (D1, D2) de l'état de non-transmission à l'état de transmission,
**caractérisé par le fait que**
l'unité d'acquisition (81) est configurée pour acquérir, comme paramètre indiquant le degré d'un changement de comportement du véhicule à selle (1), le changement de comportement de véhicule pouvant être réalisé du fait d'une augmentation ou d'une diminution du couple de la source d'alimentation d'énergie (11), un paramètre relatif à au moins l'un parmi ce qui suit:
(a) une quantité physique relative à un état de virage du véhicule à selle (1);
(b) un angle d'inclinaison entre un axe du véhicule à selle (1) dans une direction avant-arrière du véhicule à selle (1) et un plan horizontal; ou
(c) un coefficient de frottement contre une surface de route (Q) sur laquelle circule le véhicule à selle (1).

2. Véhicule à selle (1) selon la revendication 1, dans lequel
l'unité d'acquisition (81) est configurée pour acquérir, comme l'au moins un paramètre indiquant le degré d'un changement de comportement de véhicule pouvant être réalisé du fait d'une augmentation ou d'une diminution du couple provenant de la source d'alimentation d'énergie (11), un paramètre indiquant une quantité physique relative à un état de virage du véhicule à selle (1), et
l'unité de commande (82) est configurée pour modifier le couple provenant de la source d'alimentation d'énergie (11) sur base du paramètre indiquant la quantité physique relative à l'état de virage du véhicule à selle (1) qui a été acquise par l'unité d'acquisition (81).

3. Véhicule à selle (1) selon l'une quelconque des revendications 1 ou 2, dans lequel
l'unité d'acquisition (81) est configurée pour acquérir par ailleurs, comme paramètre indiquant une condition de circulation du véhicule à selle (1) qui est possible de générer une accélération ou une décélération du véhicule à selle (1), un paramètre indiquant une distance entre le véhicule à selle (1) et un véhicule précédant qui circule devant le véhicule à selle (1) dans une direction avant-arrière du véhicule à selle (1), et
l'unité de commande (82) est configurée pour modifier le couple provenant de la source d'alimentation d'énergie (11) sur base du paramètre indiquant la distance entre le véhicule à selle (1) et le véhicule qui précède qui a été acquise par l'unité d'acquisition (81).

4. Véhicule à selle (1) selon l'une quelconque des revendications 1 à 3, dans lequel
l'unité d'acquisition (81) est configurée pour acquérir, comme l'au moins un paramètre indiquant le degré d'un changement de comportement de véhicule pouvant être réalisé du fait d'une augmentation ou d'une diminution du couple provenant de la source d'alimentation d'énergie (11), un paramètre indiquant un angle d'inclinaison entre un axe du véhicule à selle (1) dans une direction avant-arrière du véhicule à selle (1) et un plan horizontal, et
l'unité de commande (82) est configurée pour modifier le couple provenant de la source d'alimentation d'énergie (11) sur base du paramètre indiquant l'angle d'inclinaison qui a été acquis par l'unité d'acquisition (81).

5. Véhicule à selle (1) selon l'une quelconque des revendications 1 à 4, dans lequel
l'unité d'acquisition (81) est configurée pour acquérir, comme l'au moins un paramètre indiquant le degré d'un changement de comportement de véhicule pouvant être réalisé du fait d'une augmentation ou d'une diminution du couple provenant de la source d'alimentation d'énergie (11), un paramètre indiquant un coefficient de frottement contre une surface de route sur laquelle circule le véhicule à selle (1), et
l'unité de commande (82) est configurée pour modifier le couple provenant de la source d'alimentation d'énergie (11) sur base du paramètre indiquant le coefficient de frottement qui a été acquis par l'unité d'acquisition (81).

6. Véhicule à selle (1) selon l'une quelconque des revendications 1 à 5, dans lequel
l'unité de commande (82) est configurée pour acquérir une valeur de changement cible à laquelle doit être modifié le couple provenant de la source d'alimentation d'énergie (11), et pour modifier le couple provenant de la source d'alimentation d'énergie (11) selon la valeur de changement cible dans la période de changement de couple, et
la valeur de changement cible comporte une composante de conception de couple réglée en fonction de l'au moins un paramètre et une composante de réduction de choc réglée de manière à réduire un choc à transmettre par la commutation de l'état de non-transmission à l'état de transmission, la composante de réduction de choc étant indépendante de l'au moins un paramètre,
dans lequel la composante de réduction de choc est une composante destinée à réduire le couple de sortie provenant de la source d'alimentation d'énergie lorsque le véhicule à selle accélère et pour augmenter le couple de sortie provenant de la source d'alimentation d'énergie lorsque le véhicule à selle décélère, et dans lequel la composante de conception de couple est une composante destinée à augmenter ou à réduire le couple de sortie de la source d'alimentation d'énergie plus que la composante de réduction de choc lorsque le véhicule à selle accélère ou décélère.

7. Véhicule à selle (1) selon la revendication 2,
le véhicule à selle (1) étant configuré pour tourner tout en s'inclinant, et pour s'incliner dans une direction vers la gauche du véhicule à selle (1) tout en effectuant un virage à gauche et pour s'incliner vers la droite du véhicule à selle (1) tout en effectuant un virage à droite,
dans lequel
l'unité d'acquisition (81) est configurée pour acquérir la quantité physique relative à l'état de virage sur base d'un angle d'inclinaison du véhicule à selle (1).

8. Véhicule à selle (1) selon l'une quelconque des revendications 1 à 7, dans lequel
l'unité de commande (82) est configurée pour commander un moment pour commencer le processus de changement pour amener le processus de changement à commencer en même temps que, ou avant, le deuxième moment, et pour commander un moment pour terminer le processus de changement pour amener le processus de changement à se terminer après le deuxième moment, le deuxième moment étant la commutation de l'état de non-transmission à l'état de transmission.
